# EUROPEAN PATENT APPLICATION

(11) **EP 4 307 778 A1**
(43) Date of publication of application: **17.01.2024**
(21) Application number: 22766755.7
(22) Date of filing: 16.02.2022
(51) Int. Cl.: H04W 56/00, H04W 72/04, H04W 72/12, H04W 92/18, H04L 1/16, H04W 76/14, H04W 76/23, H04W 28/04

(54) **SYSTEM FOR CONTROLLING INTER-TERMINAL DIRECT COMMUNICATION, WIRELESS TERMINAL DEVICE, VEHICLE, CONTROL DEVICE, BASE STATION, METHOD, AND PROGRAM**

(30) Priority: 11.03.2021 JP 2021039713; 20.04.2021 JP 2021071210
(71) Applicant: Softbank Corp., Tokyo 105-7529 (JP)
(72) Inventor: MIKAMI Manabu, Tokyo 105-7529 (JP)
(74) Representative: SSM Sandmair
(86) International application number: PCT/JP2022/006098
(87) International publication number: WO 2022/190791

(57) **Abstract**

A radio-resource assignment control mode for assigning radio resources for an inter-terminal direct communication to plural UEs in a same group is appropriately selected to ensure low latency and highly reliable inter-terminal direct communications in the same group. A radio-resource assignment control mode for assigning the radio resources for the inter-terminal direct communication of the plural UEs 20 belonging to a group can be selected from a first mode in which a base station assigns radio resources for inter-terminal direct communication and a second mode in which any one of plural UEs assigns radio resources for inter-terminal direct communication. A base station 10 confirms whether or not all UEs in a group are located in a cell of the base station 10 and are in a synchronized state in which a radio connection setup with the base station 10 is completed and the synchronization with the base station 10, and transmits resource control information for inter-terminal direct communication including a first mode allowable message allowing an operation in the first mode, to the plural UEs, in case that all UEs in the group are confirmed to be in the synchronized state with the base station 10.

## Description

### TECHNICAL FIELD

The present invention relates to a selection control of a radio-resource assignment control mode in an inter-terminal direct communication of plural radio terminal apparatuses capable of communicating via a base station of a mobile communication network, and more particularly to the selection control of the radio-resource assignment control mode in the inter-terminal direct communication when the plural radio terminal apparatuses form one or plural groups. The present invention also relates to an HARQ retransmission control in data transmission via an inter-terminal direct communication of plural radio terminal apparatuses capable of communicating via a base station of a mobile communication network.

### BACKGROUND ART

There is conventionally known a communication method for performing a direct radio communication between short-range apparatuses (D2D: Device-to-Device) such as V2V (Vehicle-to-Vehicle), V2I (Vehicle-to-Infrastructure), V2P (Vehicle-to-Pedestrian), and V2X (Vehicle-to-Everything). In particular, the V2X using a cellular communication technology of mobile communication systems is also called as a "cellular V2X."

In the specifications of the 3GPP (3rd Generation Partnership Project) LTE (Long Term Evolution) and the next generation (NR), standard specifications for a Sidelink communication method have been formulated for the direct radio communication between the short-range apparatuses (D2D) such as V2V, V2I, V2P, and V2X using an interface called PC5 without going through a mobile communication network (core network) (for example, see Non-Patent Literatures 1, 2, 3 and 4).

As radio-resource assignment control modes in the Sidelink communication system, there are known a mode SL Mode-1 (hereinafter referred to as "first mode"), in which the base station assigns Sidelink radio resources, and a mode SL Mode-2 (hereinafter also referred to as "second mode"), in which the radio terminal apparatus itself assigns Sidelink radio resources (for example, see Patent Literature 1 and Non-Patent Literature 1). Although the first mode has the advantage of realizing efficient inter-terminal direct communication (between in-vehicle terminals) by the radio-resource assignment control of Sidelink from the base station in the service area of the cell of the base station, there is a problem that it cannot be applied outside the service area of the cell of the base station because synchronization and selection of radio resources required for the inter-terminal direct communication depend on synchronization signals and control signals transmitted by the base station. On the other hand, in the second mode, the radio terminal apparatus can autonomously communicate by detecting or randomly selecting necessary radio resources without relying on the base station, and has the advantage of being applicable even outside the service area of the cell of the base station. However, in particular, if there are many terminals that perform autonomous inter-terminal direct communication, the signals transmitted by the terminals collide with each other, increasing the ratio of mutual interference. As a result, there is a problem that the quality of inter-terminal direct communication tends to deteriorate.

In order to improve the reliability of user data transmission (hereinafter referred to as "SL transmission") by the Sidelink communication method, HARQ retransmission control based on SL HARQ (Hybrid Automatic Repeat Request) ACK/NACK fed back from the reception-side terminal through PSFCH (Physical Sidelink Feedback Channel) is known (Patent Literature 2, Non-Patent Literature 5).

### CITATION LIST

### PATENT LITERATURE

Patent Literature 1: EP 3136811 B1
Patent Literature 2: US 2020/0314959 A1

### NON-PATENT LITERATURE

Non-Patent Literature 1: Pavel Mach, Zdenek Becavar, and Tomas Vanek, "In-Band Device-to-Device Communication in OFDMA Cellular Networks: A Survey and Challenges," IEEE Communication Surveys & Tutorials, vol.17, no.4, pp.1885-1922, June 2015.
Non-Patent Literature 2: 3GPP TR22.886 V16.2.0, "Study on enhancement of 3GPP support for 5G V2X services (Release 16)," Dec. 2018.
Non-Patent Literature 3: 3GPP TR37.985 V16.0.0, "Overall description of Radio Access Network (RAN) aspects for Vehicle-to-everything (V2X) based on LTE and NR (Release 16)," June 2020.
Non-Patent Literature 4: 3GPP TR38.885 V16.0.0, "Study on NR Vehicle-to-Everything (V2X) (Release 16)," March 2019.
Non-Patent Literature 5: Shao-Yu Lien, Der-Jiunn Deng, Chun-Cheng Lin, Hua-Lung Tsai, Tao Chen, Chao Guo, And Shin-Ming Cheng, "3GPP NR Sidelink Transmissions Toward 5G V2X," IEEE Access, vol.8, pp .35368-35382, February 2020 (DOI: 10.1109/ACCESS.2020.2973706).

### SUMMARY OF INVENTION

### TECHNICAL PROBLEM

In recent years, a selection control of radio-resource assignment control mode (also called "Dynamic Mode Selection" or "Dynamic Mode Switching") has been proposed, in which the two radio-resource assignment control modes (SL Mode-1 and SL Mode-2) are dynamically switched according to the radio link state between the radio terminal apparatus and the base station.

However, in case that plural radio terminal apparatuses form one or plural groups (groups) and an inter-terminal (inter-vehicle terminal) direct communication is performed in the same group, such as, for example, a real-time information sharing such as inter-vehicle control message transmission or position information, velocity information, acceleration information among multiple vehicles required for the following-vehicle automatic driving platooning, the radio-resource assignment control mode of plural radio terminal apparatuses in the same group must be same as each other. Therefore, there is a problem that it is desirable to reliably perform a low latency and high reliable inter-terminal direct communication in the same group by appropriately selecting the radio-resource assignment control mode of plural radio terminal apparatuses in the same group.

In the first mode, in which the base station assigns Sidelink radio resources, regardless of the initial transmission and HARQ retransmissions, the dynamic radio resources for SL transmission are secured by first requesting a radio-resource assignment request (SR: Scheduling Request) for SL transmission to the base station via an uplink control channel PUCCH or the like, and notifying a permission message (Grant) for permitting SL transmission using radio resources assigned by the base station, from the base station to the terminal side by the downlink control channel (PDCCH).

However, during the first mode operation, since an L1/L2 signaling is performed to transmit the radio-resource assignment request (SR) for SL transmission to the base station via the uplink control channel (PUCCH) or the like not only in the initial transmission but also in the HARQ retransmission, there is a problem that the HARQ retransmission latency increases during the first mode operation.

### SOLUTION TO PROBLEM

A system according to a first aspect of the present invention is a system for performing a selection control of a radio-resource assignment control mode when plural radio terminal apparatuses capable of communicating via a base station of a mobile communication network form a group and perform an inter-terminal direct communication. In this system, a radio-resource assignment control mode for assigning radio resources for an inter-terminal direct communication of plural radio terminal apparatuses belonging to the group can be selected from a first mode in which the base station assigns radio resources for the inter-terminal direct communication of the plural radio terminal apparatuses, and a second mode in which any radio terminal apparatus of the plural radio terminal apparatuses assigns radio resources for the inter-terminal direct communication of the plural radio terminal apparatuses. This system comprises means for confirming whether or not all the plural radio terminal apparatuses belonging to the group are located in a service area of a cell of the base station, and are in a synchronized state in which a radio connection setup with the base station is completed and a downlink and an uplink are synchronized with the base station, and means for transmitting resource control information on the inter-terminal direct communication including a first mode allowable message allowing an operation in the first mode to the plural radio terminal apparatuses, in case of confirming that all the plural radio terminal apparatuses belonging to the group are in the synchronized state with the base station.

In the foregoing system, the resource control information on the inter-terminal direct communication may include group identification information capable of identifying the group or terminal identification information for each of the plural radio terminal apparatuses belonging to the group.

In the foregoing system, any one radio terminal apparatus of the plural radio terminal apparatuses belonging to the group may comprise: means for confirming whether or not all the plural radio terminal apparatuses belonging to the group are in a synchronized state in which a downlink and an uplink are synchronized with the base station after completion of reception of resource control information on the inter-terminal direct communication; means for transmitting a mode designation message designating the first mode to all the other radio terminal apparatuses, in case of confirming that all radio terminal apparatuses other than the own apparatus of the plural radio terminal apparatuses belonging to the group are in a synchronized state with the base station; and means for confirming whether or not all the other radio terminal apparatuses succeeded in receiving the mode designation message. Herein, the one radio terminal apparatus or all the plural radio terminal apparatuses belonging to the group may transmit a request message for requesting resource assignment control based on the first mode to the base station side, in case that all the plural radio terminal apparatuses belonging to the group have succeeded in receiving the mode designation message.

In the foregoing system, each of all the plural radio terminal apparatuses belonging to the group may comprise: means for confirming whether or not all the plural radio terminal apparatuses belonging to the group are in a synchronized state in which downlink and uplink are synchronized with the base station after completion of reception of the resource control information on the inter-terminal direct communication; means for transmitting a mode designation message that designates the first mode to all the other radio terminal apparatuses, in case of confirming that all other radio terminal apparatuses other than the own apparatus of the plural radio terminal apparatuses belonging to the group are in the synchronized state with the base station; and means for confirming whether or not all the other radio terminal apparatuses succeeded in receiving the mode designation message. Herein, each of all the plural radio terminal apparatuses belonging to the group may transmit a request message for requesting a resource control of inter-terminal direct communication of all the plural radio terminal apparatuses belonging to the group to the base station side, in case that all the plural radio terminal apparatuses belonging to the group succeeded in receiving the mode designation message.

In the foregoing system, the one radio terminal apparatus or all the plural radio terminal apparatuses belonging to the group may confirm that all the other radio terminal apparatuses are in the synchronized state, by receiving synchronization- state information indicating in the synchronized state with the base station after completion of reception of the resource control information on the inter-terminal direct communication, from all the other radio terminal apparatuses. Herein, the one radio terminal apparatus or all the plural radio terminal apparatuses belonging to the group may receive group identification information capable of identifying the group together with the synchronization-state information from all the other radio terminal apparatuses.

In the foregoing system, the group may be fixedly formed by the plural radio terminal apparatuses predetermined in advance, or formed ad-hoc by plural radio terminal apparatuses located in close proximity each other.

In the foregoing system, the radio terminal apparatus may be provided in each of plural vehicles that form the group and run on a moving path.

A radio terminal apparatus according to a first aspect of the present invention is a radio terminal apparatus that can communicate via a base station of a mobile communication network, forms a group with one or more neighboring radio terminal apparatuses, and performs an inter-terminal direct communication. This radio terminal apparatus comprises: means for confirming whether or not all the plural radio terminal apparatuses belonging to the group are in a synchronized state in which downlink and uplink are synchronized with the base station after completion of reception of resource control information on the inter-terminal direct communication; means for transmitting a mode designation message designating the first mode to all the other radio terminal apparatuses, in case of confirming that all the other radio terminal apparatuses other than the own apparatus of the plural radio terminal apparatuses belonging to the group are in the synchronized state with the base station; and means for confirming whether or not all the other radio terminal apparatuses succeeded in receiving the mode designation message.

A vehicle according to a first aspect of the present invention is a vehicle of grouping with other vehicles and running on a moving path, and comprises the foregoing radio terminal apparatus.

A control apparatus according to a first aspect of the present invention is a control apparatus for performing a selection control of a radio-resource assignment control mode when plural radio terminal apparatus capable of communicating via a base station of a mobile communication network form a group and perform an inter-terminal direct communication. In this control apparatus, a radio-resource assignment control mode for assigning radio resources for an inter-terminal direct communication of plural radio terminal apparatuses belonging to the group can be selected from a first mode, in which the base station assigns radio resources for inter-terminal direct communication of the plural radio terminal apparatuses, and a second mode, in which any radio terminal apparatus of the plural radio terminal apparatuses assigns radio resources for inter-terminal direct communication of the plural radio terminal apparatuses. This control apparatus comprises: means for confirming whether or not all the plural radio terminal apparatuses belonging to the group are located in a cell of the base station, and are in a synchronized state in which a radio connection setup with the base station is completed and a downlink and an uplink are synchronized with the base station; and means for transmitting resource control information on the inter-terminal direct communication including a first mode allowable message allowing an operation in the first mode to the plural radio terminal apparatuses, in case of confirming that all the plural radio terminal apparatuses belonging to the group are in the synchronized state with the base station.

The control apparatus may be a CU (Central Unit) or a MEC (Multi-access Edge Computing) apparatus, which is provided in a base station of a mobile communication network or a node between the base station and a core network, or outside the core network.

A base station according to a first aspect of the present invention is a base station of a mobile communication network, and comprises the foregoing control apparatus.

A method according to a first aspect of the present invention is a method for performing a selection control of a radio-resource assignment control mode when plural radio terminal apparatuses capable of communicating via a base station of a mobile communication system form a group and perform an inter-terminal direct communication. This method includes: enabling selection from a first mode in which the base station assigns radio resources for inter-terminal direct communication of the plural radio terminal apparatuses and a second mode in which any radio terminal apparatus of the plural radio terminal apparatuses assigns radio resources for inter-terminal direct communication of the plural radio terminal apparatuses, as a radio-resource assignment control mode for assigning radio resources for the inter-terminal direct communication of plural radio terminal apparatuses belonging to the group; confirming whether or not all the plural radio terminal apparatuses belonging to the group are located in a service area of a cell of the base station, and are in a synchronized state in which a radio connection setup with the base station is completed and a downlink and an uplink are synchronized with the base station; and transmitting resource control information on the inter-terminal direct communication including a first mode allowable message allowing an operation in the first mode to the plural radio terminal apparatuses, in case of confirming that all the plural radio terminal apparatuses belonging to the group are in the synchronized state with the base station.

A program according to a first aspect of the present invention is a program for executing in a computer or a processor provided in a control apparatus for performing a selection control of a radio-resource assignment control mode when plural radio terminal apparatuses capable of communicating via a base station of a mobile communication system form a group and perform an inter-terminal direct communication. This program includes: a program code for enabling a selection from a first mode in which the base station assigns radio resources for an inter-terminal direct communication of the plural radio terminal apparatuses and a second mode in which any radio terminal apparatus of the plural radio terminal apparatuses assigns radio resources for inter-terminal direct communication of the plural radio terminal apparatuses, as a radio-resource assignment control mode for assigning radio resources for inter-terminal direct communication of plural radio terminal apparatuses belonging to the group; a program code for confirming whether or not all the plural radio terminal apparatuses belonging to the group are located in a service area of a cell of the base station, and are in a synchronized state in which a radio connection setup with the base station is completed and a downlink and an uplink are synchronized with the base station; and a program code for transmitting resource control information on the inter-terminal direct communication including a first mode allowable message allowing an operation in the first mode to the plural radio terminal apparatuses, in case of confirming that all the plural radio terminal apparatuses belonging to the group are in the synchronized state with the base station.

A program according to a first aspect of the present invention is a program for executing in a computer or a processor provided in a radio terminal apparatus that can communicate via a base station of a mobile communication network, forms a group with one or more neighboring radio terminal apparatuses, and performs inter-terminal direct communication. This program includes: a program code for confirming whether or not all the plural radio terminal apparatuses belonging to the group are in a synchronized state in which a downlink and an uplink are synchronized with the base station after completion of reception of resource control information on the inter-terminal direct communication; a program code for transmitting a mode designation message designating the first mode to all the other radio terminal apparatuses, in case of confirming that all the other radio terminal apparatuses other than the own apparatus of the plural radio terminal apparatuses belonging to the group are in a synchronized state with the base station, and a program code for confirming whether or not all the other radio terminal apparatuses succeeded in receiving the mode designation message.

In each of the system, the radio terminal apparatus, the vehicle, the control apparatus, the base station, the method and the program according to the first aspect, the second mode may be selected as the initial radio-resource assignment control mode.

A base station according to a second aspect of the present invention is a base station of a mobile communication network having a function of performing a communication with plural radio terminal apparatuses that perform inter-terminal direct communication and are capable of controlling radio resources used for the inter-terminal direct communication. This base station comprises: means for monitoring a channel for feedback from a reception-side radio terminal apparatus to a transmission-side radio terminal apparatus in a data transmission via the inter-terminal direct communication, and decoding the channel for feedback; and means for notifying a permission message including radio resource information for HARQ retransmission, to the transmission-side radio terminal apparatus, when a result of the decoding of the channel for feedback includes a HARQ negative acknowledgment from the reception-side radio terminal apparatus.

A radio terminal apparatus according to a second aspect of the present invention is a radio terminal apparatus having a function of performing a communication via a base station of a mobile communication network and a function of performing an inter-terminal direct communication with neighboring radio terminal apparatuses. This radio terminal apparatus comprises: means for receiving a permission message including radio resource information for HARQ retransmission from the base station without receiving a HARQ negative acknowledgment from the neighboring radio terminal apparatuses, when a data transmission is performed to the neighboring radio terminal apparatuses via the inter-terminal direct communication; and means for performing an HARQ retransmission of the data transmission to the neighboring radio terminal apparatuses in response to the permission message received from the base station without receiving the HARQ negative acknowledgment from the neighboring radio terminal apparatuses.

A system according to a second aspect of the present invention comprises the base station according to the first aspect and the radio terminal apparatus.

A method according to a second aspect of the present invention is a method for performing an HARQ retransmission control in a data transmission via an inter-terminal direct communication. This method includes: monitoring a channel for feedback from a reception -side radio terminal apparatus to a transmission-side radio terminal apparatus in a data transmission via the inter-terminal direct communication, and decoding the channel for feedback;, and notifying a permission message including radio resource information for HARQ retransmission, to the transmission-side radio terminal apparatus when a result of the decoding of the channel for feedback includes a HARQ negative acknowledgment from the reception -side radio terminal apparatus.

A program in a base station according to a second aspect of the present invention is a program for executing in a computer or a processor provided in a base station of a mobile communication network having a function of performing a communication with plural radio terminal apparatuses that perform an inter-terminal direct communication and are capable of controlling radio resources used for the inter-terminal direct communication. This program includes: a program code for monitoring a channel for feedback from a reception -side radio terminal apparatus to a transmission-side radio terminal apparatus in a data transmission via the inter-terminal direct communication, and decoding the channel for feedback; and a program code for notifying a permission message including radio resource information for HARQ retransmission to the transmission-side radio terminal apparatus when a result of the decoding of the channel for feedback includes a HARQ negative acknowledgment from the reception-side radio terminal apparatus.

A program in a radio terminal apparatus according to a second aspect of the present invention is a program for executing in a computer or a processor provided in a radio terminal apparatus having a function of communicating via a base station of a mobile communication network and a function of performing an inter-terminal direct communication with neighboring radio terminal apparatuses. This program includes: a program code for receiving a permission message including radio resource information for HARQ retransmission from the base station without receiving a HARQ negative acknowledgment from the neighboring radio terminal apparatuses, when a data transmission is performed to the neighboring radio terminal apparatuses via the inter-terminal direct communication; and a program code for performing an HARQ retransmission of the data transmission to the neighboring radio terminal apparatuses in response to the permission message received from the base station without receiving the HARQ negative acknowledgment from the neighboring radio terminal apparatuses.

A base station according to a third aspect of the present invention is a base station of a mobile communication network having a function of communicating with plural radio terminal apparatuses that perform an inter-terminal direct communication and are capable of controlling radio resources used for the inter-terminal direct communication. This base station comprises: means for receiving a feedback message including a HARQ negative acknowledgment and a radio-resource assignment request from a reception-side radio terminal apparatus of data transmission via the inter-terminal direct communication; and means for transmitting a permission message including the HARQ negative acknowledgment and radio resource information for HARQ retransmission to the reception-side radio terminal apparatus of the data transmission in response to the feedback message.

A first radio terminal apparatus according to a third aspect of the present invention is a radio terminal apparatus having a function of performing a communication via a base station of a mobile communication network and a function of performing an inter-terminal direct communication with neighboring radio terminal apparatuses. This radio terminal apparatus comprises: means for receiving data transmission from the neighboring radio terminal apparatuses via the inter-terminal direct communication; and means for transmitting a feedback message including a HARQ negative acknowledgment for the data transmission and a radio-resource assignment request to the base station.

A second radio terminal apparatus according to a third aspect of the present invention is a radio terminal apparatus having a function of performing a communication via a base station of a mobile communication network and a function of performing an inter-terminal direct communication with neighboring radio terminal apparatuses. This radio terminal apparatus comprises: means for receiving a permission message including a HARQ negative acknowledgment and radio resource information for HARQ retransmission from the base station without receiving a HARQ negative acknowledgment from the neighboring radio terminal apparatuses, when a data transmission is performed to the neighboring radio terminal apparatuses via the inter-terminal direct communication; and means for performing an HARQ retransmission of the data transmission to the neighboring radio terminal apparatuses in response to the permission message received from the base station without receiving the HARQ negative acknowledgment from the neighboring radio terminal apparatuses.

A system according to a third aspect of the present invention comprises the base station according to the second aspect, the first radio terminal apparatus, and the second radio terminal apparatus.

A method according to a third aspect of the present invention is a method for performing an HARQ retransmission control in a data transmission via an inter-terminal direct communication. This method includes: receiving a feedback message including a HARQ negative acknowledgment and a radio-resource assignment request from a reception-side radio terminal apparatus in a data transmission via the inter-terminal direct communication; and transmitting a permission message including the HARQ negative acknowledgment and radio resource information for HARQ retransmission to the reception-side radio terminal apparatus of the data transmission in response to the feedback message.

A program in a base station according to a third aspect of the present invention is a program for executing in a computer or a processor provided in a base station of a mobile communication network having a function of performing a communication with plural radio terminal apparatuses that perform an inter-terminal direct communication and are capable of controlling radio resources used for the inter-terminal direct communication. This program includes: a program code for receiving a feedback message including a HARQ negative acknowledgment and a radio-resource assignment request from a reception-side radio terminal apparatus in a data transmission via the inter-terminal direct communication; and a program code for transmitting a permission message including the HARQ negative acknowledgment and radio resource information for HARQ retransmission to the reception-side radio terminal apparatus of the data transmission in response to the feedback message.

A program in a first radio terminal apparatus according to a third aspect of the present invention is a program for executing in a computer or a processor provided in a radio terminal apparatus having a function of performing a communication via a base station of a mobile communication network and a function of performing an inter-terminal direct communication with neighboring radio terminal apparatuses. This program includes: a program code for receiving a data transmission from the neighboring radio terminal apparatuses via the inter-terminal direct communication; and a program code for transmitting a feedback message including a HARQ negative acknowledgment for the data transmission and a radio-resource assignment request to the base station.

A program in a second radio terminal apparatus according to a third aspect of the present invention is a program for executing in a computer or a processor provided in a radio terminal apparatus having a function of performing a communication via a base station of a mobile communication network and a function of performing an inter-terminal direct communication with neighboring radio terminal apparatuses. This program includes: a program code for receiving a permission message including a HARQ negative acknowledgment and radio resource information for HARQ retransmission from the base station without receiving a HARQ negative acknowledgment from the neighboring radio terminal apparatuses, when a data transmission is performed to the neighboring radio terminal apparatuses via the inter-terminal direct communication; and a program code for performing an HARQ retransmission of the data transmission to the neighboring radio terminal apparatuses in response to the permission message received from the base station without receiving a HARQ negative acknowledgment from the neighboring radio terminal apparatuses.

A vehicle according to another aspect of the present invention is a vehicle that runs on a moving path. This vehicle comprises any one of the foregoing radio terminal apparatuses.

### ADVANTAGEOUS EFFECTS OF INVENTION

According to the present invention, in the case of performing an inter-terminal direct communication in a group that is formed by plural radio terminal apparatuses capable of communicating via a base station of a mobile communication network, it is possible to reliably perform low latency and highly reliable inter-terminal direct communication in the same group, by appropriately selecting a radio-resource assignment control mode for assigning radio resources for the inter-terminal direct communication to plural radio terminal apparatuses in the same group.

Further, according to the present invention, it is possible to reduce an HARQ retransmission latency during operating the assignment control mode in which a base station assigns radio resources for the inter-terminal direct communication.

### BRIEF DESCRIPTION OF DRAWINGS

[FIG. 1] FIG. 1 is a schematic configuration diagram showing an example of an overall configuration of a communication system according to an embodiment.
[FIG. 2] FIG. 2 is an illustration showing an example of radio frames of a downlink (DL) and an uplink (UL) of Uu communication and a Sidelink communication (SL) in a communication system according to an embodiment.
[FIG. 3] FIG. 3 is an illustration showing another example of radio frames of a downlink (DL) and an uplink (UL) of Uu communication and a Sidelink communication (SL) in a communication system according to an embodiment.
[FIG. 4] FIG. 4 is an illustration showing yet another example of radio frames of a downlink (DL) and an uplink (UL) of Uu communication and a Sidelink communication (SL) in a communication system according to an embodiment.
[FIG. 5A] FIG. 5A is an illustration showing an example of a first radio-resource assignment control mode (SL Mode-1) in a communication system according to an embodiment.
[FIG. 5B] FIG. 5B is an illustration showing an example of a first radio-resource assignment control mode (SL Mode-1) in a communication system according to an embodiment.
[FIG. 6A] FIG. 6A is an illustration showing an example of a second radio-resource assignment control mode (SL Mode-2) in a communication system according to an embodiment.
[FIG. 6B] FIG. 6B is an illustration showing an example of a second radio-resource assignment control mode (SL Mode-2) in a communication system according to an embodiment.
[FIG. 7A] FIG. 7A is an illustration showing an example of dynamic switching control of radio-resource assignment control modes (SL Mode-1, SL Mode-2) in a communication system according to an embodiment.
[FIG. 7B] FIG. 7B is an illustration showing an example of dynamic switching control of radio-resource assignment control modes (SL Mode-1, SL Mode-2) in a communication system according to an embodiment.
[FIG. 8] FIG. 8 is a sequence diagram showing an example of dynamic switching control from the second radio-resource assignment control mode (SL Mode-2) to the first radio-resource assignment control mode (SL Mode-1) in a communication system according to an embodiment.
[FIG. 9] FIG. 9 is a sequence diagram showing another example of dynamic switching control from the second radio-resource assignment control mode (SL Mode-2) to the first radio-resource assignment control mode (SL Mode-1) in a communication system according to an embodiment.
[FIG. 10] FIG. 10 is a sequence diagram showing an example of a determination of a connection state between a UE and a base station in a communication system according to an embodiment.
[FIG. 11] FIG. 11 is a sequence diagram showing an example of a determination of a synchronization establishment and a connection state in a Sidelink communication (SL) of a UE located in a service area of a cell of a base station in a communication system according to an embodiment.
[FIG. 12] FIG. 12 is a sequence diagram showing an example of a determination of a synchronization establishment and a connection state of a Sidelink communication (SL) of a UE located outside a service area of a cell of a base station in a communication system according to an embodiment.
[FIG. 13A] FIG. 13A is an illustration showing an example of a configuration example of a radio resource (RE) of a time slot 431 at a time of initial transmission and at a time of HARQ retransmission of a SL data transmission according to a reference example.
[FIG. 13B] FIG. 13B is an illustration showing an example of a configuration example of a radio resource (RE) of a time slot 431 at a time of initial transmission and at a time of HARQ retransmission of a SL data transmission according to a reference example.
[FIG. 14] FIG. 14 is a sequence diagram showing an example of an initial transmission and an HARQ retransmission of SL data transmission during the SL Mode-1 operation according to a reference example.
[FIG. 15] FIG. 15 is a sequence diagram showing an example of an initial transmission and HARQ retransmission of SL data transmission during SL Mode-1 operation in a communication system according to an embodiment.
[FIG. 16] FIG. 16 is an illustration showing an example of radio frames of a downlink (DL) and an uplink (UL) of Uu communication and a Sidelink communication (SL) in the data transmission of FIG. 15.
[FIG. 17] FIG. 17 is a sequence diagram showing another example of an initial transmission and HARQ retransmission of SL data transmission during SL Mode-1 operation in a communication system according to an embodiment.

### DESCRIPTION OF EMBODIMENTS

Hereinafter, embodiments of the present invention are described with reference to the drawings.

A system according to an embodiment described herein is a system for performing a selection control of a radio-resource assignment control mode, when plural radio terminal apparatuses mounted on plural vehicles, which are capable of communicating via a base station of a mobile communication network, form a group (group) and perform an inter-terminal direct communication by a Sidelink communication method, in case that vehicles such as plural trucks are platooning, etc.

A system according to another embodiment described herein is a system that can reduce an HARQ (Hybrid Automatic Repeat Request) retransmission latency during an SL Mode-1 (first mode) operation, in which radio resources are assigned by a base station of a mobile communication network when the plural radio terminal apparatuses respectively mounted on the plural vehicles perform the inter-terminal direct communication by a Sidelink communication method.

Herein, although embodiments of the present invention are described on the premise of application to the LTE (Long Term Evolution)/LTE-Advanced mobile communication system (hereinafter referred to as "LTE system") and the fifth-generation mobile communication system (hereinafter referred to as "5G system"), the concept of the present invention can be applied to any system that uses similar cell physical channel configurations. Reference signal sequences used for the propagation path estimation and coding schemes used for error correction are not limited to those defined in the LTE system and the 5G system, and may be of any type as long as they are suitable for these uses. Embodiments of the present invention may be applied to the next-generation mobile communication systems after the fifth generation (also referred to as "NR system").

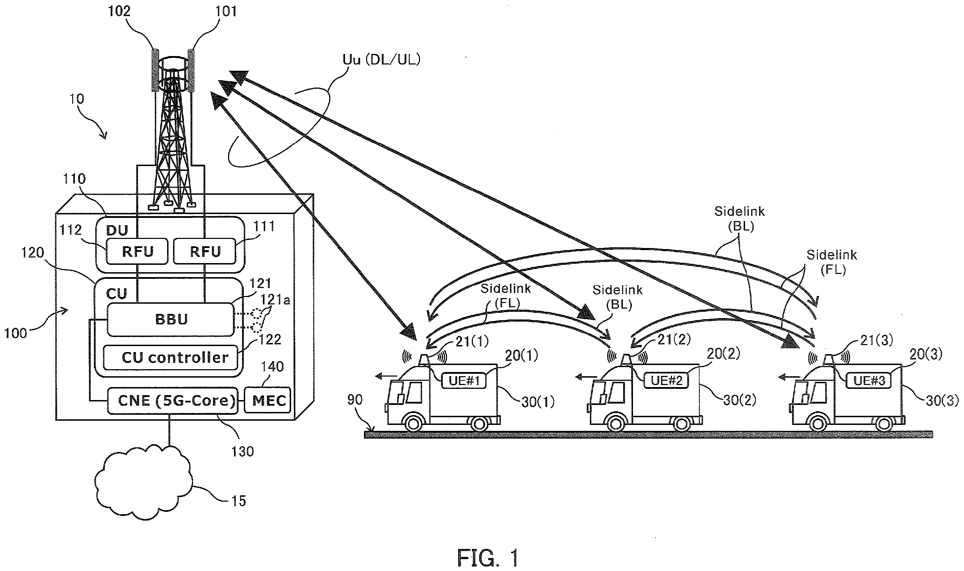

FIG. 1 is a schematic configuration diagram showing an example of an overall configuration of a communication system according to an embodiment of the present invention. In FIG. 1, the communication system according to the present embodiment is an example of the 5G system, and is provided with a base station 10 with a two-cell configuration connected to a core network (for example, EPC, 5GC, or NGC) 15 of a mobile communication network. It is noted that although the example in FIG. 1 shows an example in which one base station 10 is provided, the number of base stations may be plural. The cell formed by the base station 10 may be a single cell or three or more cells.

The core network 15 is, for example, an IP (Internet Protocol)-based EPC (Evolved Packet Core) defined by the 3GPP (3rd Generation Partnership Project). The core network 15 may be a core network dedicated to the 5G system, or a core network shared by the 5G system and the LTE system. A core network apparatus (EPC apparatus or 5GC apparatus) is, for example, a SCEF (Service Capability Exposure Function), NEF (Network Exposure Function) of logical node with a standard interface for providing services defined in the 3GPP to third-party application providers, a UPF (User Plane Function) for processing user data, or the like. The core network apparatus (EPC apparatus or 5GC apparatus) may be a VAE (V2X Application Enabler) that enables coordination of plural V2X (Vehicle-to-Everything) services. A part of the functions of the core network apparatus (for example, UPF functions or logic node functions other than UPF) may be included in the base station 10 as in the present embodiment.

The base station 10 is, for example, a gNodeB (gNB) or en-gNodeB (en-gNB) of the 5G system, and can wirelessly communicate with a communication terminal apparatus (also referred to as "terminal", "user terminal", "user equipment", "UE", "mobile station", "mobile device", or the like, hereinafter referred to as "UE") 20 located in a cell, which is a radio communication area formed by the own station, via antennas 101 and 102.

The base station 10 is provided with, for example, a base station apparatus 100 provided inside a building or the like, and plural antennas 101 and 102 corresponding to two cells forming the cell formed by the base station 10. Each of the plural antennas 101 and 102 is provided on top of a building, pillar, steel tower, or the like. The antennas 101 and 102 may be omnidirectional antennas, or antennas composed of plural antenna elements capable of forming one or plural beams in a predetermined direction (for example, a Massive MIMO antenna composed of an array antenna in which a large number of antenna elements are disposed two-dimensionally or three-dimensionally). It is noted that, although two antennas 101 and 102 are provided in the illustrated example, the number of antennas may be singular or three or more.

The base station apparatus 100 is provided with, for example, a DU (Distribution Unit) 110, a CU (Centralization Unit) 120, a CNE (Core Network Equipment) 130, and an MEC (Multi-access Edge Computing) apparatus 140. It is noted that, although the CNE 130 is an example of the 5G core in the illustrated example, it may be an EPC in a Non-Stand Alone (NSA) configuration in which 5G layer 3 (L3) is controlled by the LTE. The MEC apparatus 140 may be provided in a node between the base station 10 and the core network 15, or may be provided outside the core network.

The DU 110 is provided with, for example, a RFU (Radio Unit) 111 and a RFU 112. The RFU 111 and RFU 112 are provided with, for example, an amplifier section, a frequency conversion section, a transmission/reception switching section (DUP), an orthogonal modulation/demodulation section, and the like. The DU 110 may have a part of functions of a BBU (Base Band Unit) described below. It is noted that, although two RFUs 111 and 112 are provided in order to form two cells per base station in the illustrated example, the number of RFUs may be singular or three or more.

The CU 120 is provided with, for example, a BBU (Base Band Unit) 121 and a CU controller 122 which controls each section of the CU 120. The BBU 121 converts (modulates and demodulates), for example, control information and user data (IP packets) to be transmitted and received, and baseband signals such as OFDM signals transmitted and received via radio transmission paths. As the modulation method, for example, QPSK, 16QAM, 64QAM, or the like can be used. Baseband signals are transmitted to and received from the DU 110. The CU controller 122 is configured with, for example, a CPU and a memory, and controls each section of the CU 120 by executing a preinstalled program.

The CU 120 may connect to plural DUs. The CU 120 may be connected to a DU of remotely installed slave station via a high-speed communication line such as an optical communication line using optical fiber. Further, plural BBUs 121 may be provided in the CU 120, and may be configured to be connected for each RFU. For example, the BBU 121 may be configured with plural BBU#1 and BBU#2, provided with plural external connection sections 121a connected to each of the BBU#1 and BBU#2, and configured such that plural remotely located external RFU#1 and RFU#2 are remotely connected to these plural external connection sections 121a via a high-speed communication line such as an optical communication line.

The CNE 130 has the UPF functions described above, and communicates with various kinds of nodes on the core network 15 using a predetermined communication interface and protocol. The CNE 130 relays various kinds of data such as user data between the core network 15 and the CU 120, and relays various kinds of data such as user data between the core network 15, and the CU 120 and the MEC apparatus 140.

The MEC apparatus 140 is configured with, for example, a CPU and a memory, and can process various kinds of data transmitted to and received from the UE 20 located in the cell of the base station 10 by executing a preinstalled program or a program downloaded via the communication network, and perform various kinds of controls for the UE 20 located in the cell of the base station 10. The MEC apparatus 140 can also function as various kinds of means for selection control of a radio-resource assignment control mode described later by executing a predetermined program.

It is noted that the selection control of the radio-resource assignment control mode described later may be performed by the above-described CU 120 instead of the MEC apparatus 140. For example, the CU controller of the CU 120 may also function as various kinds of means for selection control of the radio-resource assignment control mode described later by executing a predetermined program. The CU 120 and the MEC apparatus 140 may cooperate with each other to perform the selection control of the radio-resource assignment control mode described later.

The UEs 20(1) to 20(3) are respectively mounted on vehicles (trucks in the illustrated example) 30(1) to 30(3) that move on a road 90 as a moving path (route) located in the cell formed by the base station 10. The vehicles 30(1) to 30(3), on which UEs 20(1) to 20(3) are mounted, form a preset group, cooperate with each other, form a vehicle group, and move.

Although the illustrated example shows a case that three UEs 20(1) to 20(3) mounted on three vehicles 30(1) to 30(3) are located in the cell of the base station 10, plural UEs 20 mounted on plural vehicles 30 of two or four or more may be located. Although the illustrated example shows a case that three vehicles 30(1) to 30(3) form a vehicle group in a platoon (along the longitudinal direction of each other) and run in a group, that is, running in a platoon, a relative positional relationship between the vehicles 30 is not limited as long as the UEs 20 mounted on the plural vehicles 30 are in a positional relationship that enables a direct communication with each other. Furthermore, the vehicle 30 may be a moving object such as an automobile, a truck, a bus, or a motorcycle that moves on the road 90 that is a movement route (path) on the ground, a moving object that can move by flying along a movement route (path) in a space such as an upper airspace, or a moving object that can move along a movement route (path) such as an underground, an above water (for example, on the sea), or an underwater (for example, under the sea).

In the following description, when describing configurations, functions, and the like that are common to plural UEs 20(1) to 20(3), these are described without parentheses such as UE 20 or the like, and when describing configurations, functions, and the like that are common to plural vehicles 30(1) to 30(3), these are described without parentheses such as vehicle 30 or the like. In the inter-terminal direct communication, a UE that is a data transmission source is also referred to as a transmission-side UE 20T, and a UE that is a data transmission destination is also referred to as a reception-side UE 20R.

The UE 20 of the vehicle 30 can communicate via the base station 10 of the mobile communication network (cellular network) by a communication method via base station (for example, a next-generation NR method such as the 3G, LTE, or 5G), which is a first communication method (hereinafter, communication by the communication method via base station is also referred to as "Uu communication"). The 5G Uu communication can use communication types such as a URLLC (Ultra Reliable & Low Latency Communication) for ultra reliable/low latency communication, an eMBB (Enhanced Mobile Broadband) for high speed and large capacity communication, and an mMTC (Massive Machine Type Communication) with a large number of low-cost, low-power consumption terminals and simultaneous connections. In particular, the ultra-reliable/low-latency communication URLLC is suitable for applications such as remote monitoring and remote control in a following-vehicle automatic driving truck platooning (see Fig. 1), an automatic driving/platooning BRT (Bus Rapid Transit), and a railway vehicle running on the railroad track, etc.

For example, in the following-vehicle automatic driving truck platooning in FIG. 1, the leading vehicle (hereinafter also referred to as "leader vehicle") 30(1) is manually driven by a manned driver, and the following vehicles (hereinafter also referred to as "member vehicles") 30(2) and 30(3) are unmanned and automatically driven. In the following-vehicle automatic driving truck platooning, the UEs 20(1) to 20(3) of the vehicles 30(1) to 30(3) and a remote-operation monitoring center on the network side perform Uu communication via the base station 10 and the core network 15 of the mobile communication network. For example, the remote-operation monitoring center can receive monitoring images (still images, moving images) and sensor information of each vehicle 30(1) to 30(3) by the uplink Uu communication. The remote-operation monitoring center can transmit control signals such as emergency stop signals to each vehicle 30(1) to 30(3) by the downlink Uu communication. By the Uu communication between the vehicle and the remote-operation monitoring center on the network side, it is possible to realize centralized remote management and remote control of plural vehicles 30(1) to 30(3) and reduce the burden on the driver and improving safety.

The UE 20 is provided with, for example, an antenna 21, a transmission/reception switching section (DUP), a reception section, a CP removal section, an FFT section, a signal separation section, a propagation-path compensation section, a demodulation section, a decoding section, a DMRS propagation path (channel) estimation section, a signal multiplexing section, an IFFT section, a CP insertion section, a transmission section and a control section. The antenna 21 can be used for both Uu and Sidelink communications. The DMRS propagation path (channel) estimation section estimates a radio propagation path (equivalent propagation path), for example, based on the reception result of known demodulation reference signals (DMRS) transmitted from the base station 10. The demodulation section demodulates and decodes data signals included in transmission signals based on the estimation result of the radio propagation path (equivalent propagation path). Components of other parts have the same functions as the conventional one, so description thereof is omitted.

The UE 20 of the vehicle 30 can perform a radio communication (hereinafter also referred to as "inter-terminal direct communication") with other vehicles by a direct communication between terminals respectively mounted in the vehicles, by a second communication method that does not involve a base station of a mobile communication network (cellular network). The radio link between terminals in the inter-terminal direct communication is also referred to as a Sidelink (Sidelink) in contrast to a downlink (DL) which is a radio link from the base station side to the terminal side in the communication via base station, and an uplink (UL) which is a radio link from the terminal side to the base station side. The second communication method is, for example, a Sidelink communication method using a radio interface between terminals called PC5. The PC5 interface is a D2D (Device to Device) interface, in which, between UEs, between a UE and another apparatus (for example, vehicle), between vehicles, or between a vehicle and another apparatus, an inter-terminal direct communication is performed without going through a base station, and the PC5 interface has been standardized for the LTE since 3GPP Release 12 and for the 5G since Release 16 respectively.

The Sidelink communication system, in which terminals respectively mounted on the vehicles communicate directly with each other, is suitable for applications for transmitting control messages between the vehicles and transmitting perimeter monitoring video from the following vehicle to the leading vehicle in the following-vehicle automatic driving truck platooning (see FIG. 1) and automated driving/platooning BRT (Bus Rapid Transit) that electronically connects plural vehicles running on the road through the inter-terminal communication, or the electronic connection between railway vehicles running on the railroad track, etc.

For example, in the following-vehicle automatic driving truck platooning in FIG. 1, it is possible to perform a transmission of vehicle control messages (for example, control information such as velocity, acceleration, inter-vehicle distance, steering, etc.) between the vehicles, a transmission of surveillance monitor images (still images, moving images) and sensor information between vehicles, and the like, by the vehicle-to-vehicle communication (inter-terminal direct communication) of FL (forward link) and BL (backward link). The Sidelink (FL) in the figure is a vehicle-to-vehicle communication from the preceding vehicle to the following vehicle, and the Sidelink (BL) is a vehicle-to-vehicle communication from the following vehicle to the preceding vehicle. The following-vehicle automatic truck platooning using this vehicle-to-vehicle communication (inter-terminal direct communication) can eliminate the shortage of drivers and improve the working environment. Furthermore, by applying the 5G ultra-low latency and reliable communication in the vehicle-to-vehicle communication (inter-terminal direct communication), it is possible to shorten the inter-vehicle distance during the platooning, improve a fuel consumption efficiency by reducing the air resistance of the vehicle group, reduce CO₂ emissions, and alleviate traffic congestion by increasing the road capacity.

In the Sidelink communication method, between the UE of the vehicle of the data transmission destination, a single inter-terminal direct communication (hereinafter referred to as "single-hop communication") may be performed without involving UEs of other vehicles, or multi-hop communication involving plural inter-terminal direct communications via UEs in one or more other vehicles may be performed.

In the Sidelink communication method, a Layer-2 ID is defined, which is a communication identifier (frame identifier) that identifies a frame (also called a "MAC packet") that is a data processing unit in the data link layer (Layer-2) of the hierarchical communication model.

In the hierarchical communication model in the UE 20, for example, from the lowest layer toward the highest layer, it is configured with a layer 1 (L1) consisting of a physical layer, a layer 2 (L2) that processes data in units of frames by a MAC (Media Access Control) layer, a RLC (Radio Link Control) layer and a PDCP (Packet Data Convergence) layer, a network layer that processes data in units of packets using various kinds of protocols (for example, IP, Non-IP, ARP), an application layer, and the like. Data in the application layer is also called a "message".

The UE 20 uses, for example, part of uplink radio resources of mobile communication, designates a Destination L2ID (Dst.L2ID) which is a frame identifier as a communication identifier of a transmission destination (communication destination) in layer 2 (L2), and transmits data (message) in units of frames. The UE 20 of the reception-side vehicle 30 determines whether or not the frame identifier (Dst.L2ID) of the transmission destination included in the header of the received frame matches the frame identifier (L2ID) assigned to its own apparatus.

In case that the UE 20 of the vehicle 30 determines that the frame identifier (Dst.L2ID) of the transmission destination included in the header of the received frame matches the frame identifier (L2ID) assigned to its own apparatus, such data can be made usable to applications by processing the data so that the packets containing the data (messages) of the received frames are raised to the upper layers. On the other hand, in case that the UE 20 of the vehicle 30 determines that the frame identifier (Dst.L2ID) of the transmission destination included in the header of the received frame does not match the frame identifier (L2ID) assigned to its own apparatus, such data can be made unusable to applications by processing the data so that the packets containing the data (message) of the received frames are not raised to the upper layers.

In the example of FIG. 1, the UEs 20(1) to 20(3) of plural vehicles 30(1) to 30(3) may be located in the same cell, or may be located in cells different from each other. The UEs 20(1) to 20(3) of the vehicles 30(1) to 30(3) may selectively or simultaneously perform the inter-terminal direct communication by the Sidelink communication method and the Uu communication by the communication via base station method.

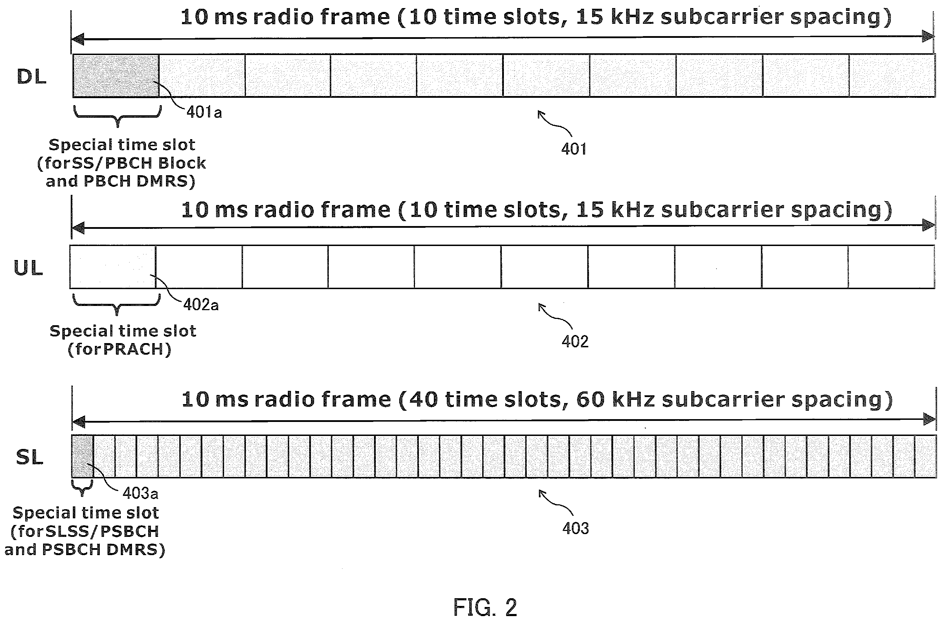

FIG. 2 is an illustration showing an example of radio frames of downlink (DL) and uplink (UL) of a Uu communication and a Sidelink communication (SL) in the communication system according to the present embodiment. In FIG. 2, different frequency bands are used in the downlink of Uu communication (hereinafter referred to as "DL"), the uplink of Uu communication (hereinafter referred to as "UL") and the Sidelink communication (hereinafter referred to as "SL").

In FIG. 2, each of the DL and UL radio frames 401 and 402 has a predetermined subcarrier interval (15 kHz in the illustrated example), and a predetermined time length (10 ms in the illustrated example) consisting of a predetermined number (10 pieces in the illustrated example) of time slots (also referred to as "subframes").

A leading time slot 401a in the DL radio frame 401 is a special time slot that includes a block (SSB) consisting of a downlink SS (synchronization signal) and a PBCH (Physical Broadcast Channel), and a PBCH_DMRS (PBCH Demodulation Reference Signal) for demodulating PBCH information. The second and subsequent DL time slots 401b can be assigned OFDM (Orthogonal Frequency Division Multiplexing) symbols used for each of a PDCCH (Physical Downlink Control Channel) for downlink control, a PDSCH (Physical Downlink Shared Channel) for data transmission, and a DMRS (Data Demodulation Reference Signal) for demodulating the data of the PDCCH and a PDSCH.

A leading time slot 402a in the UL radio frame 402 is a special time slot that includes an uplink PRACH (Physical Random Access Channel). The second and subsequent UL time slots 402b can be assigned OFDM symbols used for each of the a PUCCH (Physical Uplink Control Channel) for uplink control, the PUSCH (Physical Uplink Shared Channel) for data transmission, and the DMRS (Data Demodulation Reference Signal) for demodulating the data of the PUCCH and the PUSCH. It is noted that in time slots in which resource assignment to the PUSCH is performed, control information to be transmitted by the PUCCH may be multiplexed on the PUSCH without using the PUCCH.

In FIG. 2, a SL radio frame 403 has a predetermined subcarrier interval (60 kHz wider than the DL/UL in the illustrated example), and has a predetermined time length (10 ms in the illustrated example) consisting of a predetermined number of time slots (40 pieces, which is more than the DL/UL in the illustrated example).

A leading time slot 403a in the SL radio frame 403 is a special time slot that includes an SLSS (Sidelink Synchronization Signal) and a PSBCH (Physical Sidelink Broadcast Channel), which are configured with a Sidelink Primary Synchronization Signal (S-PSS) and a Sidelink Secondary Synchronization Signal (S-SSS) used for synchronizing Sidelink communication, and a PSBCH_DMRS (reference signal for PSBCH demodulation) for demodulating PSBCH information. The SLSS, PSBCH and PSBCH_DMRS can be used, for example, for a synchronization process and a connection establishment process for the Sidelink communication performed by any one of the UE (hereinafter also referred to as "leader UE" or "master UE") 21(1) of the plural UEs 20 as a subject with other UEs (hereinafter also referred to as "member UE") 20(2) and 20(3) outside the service area of the cell of the base station 10.

Whether or not each UE is the leader UE may be specified from the mobile communication network side (for example, the MEC apparatus), or may be determined based on information written in a storage medium (for example, SIM (Subscriber Identity Module Card) which is a subscriber information storage medium) incorporated in the UE.

The other time slots in the SL radio frame 403 can be assigned OFDM (Orthogonal Frequency Division Multiplexing) symbols used for each of a PSCCH (physical Sidelink control channel) for an L1/L2 control of Sidelink communication, a PSFCH (Physical Sidelink Feedback Channel) for data retransmission (HARQ-ACK/NACK feedback), a PSSCH (Physical Sidelink Shared Channel) for data transmission, and a DMRS for demodulating data of the PSCCH, PSFCH and PSSCH. The PSCCH can be used, for example, for a synchronization process and a connection establishment process for Sidelink communication performed by any one of the UE (leader UE, master UE) 21(1) of the plural UEs 20 as a subject with other member UEs 20(2) and 20(3) in the service area of the cell of the base station 10.

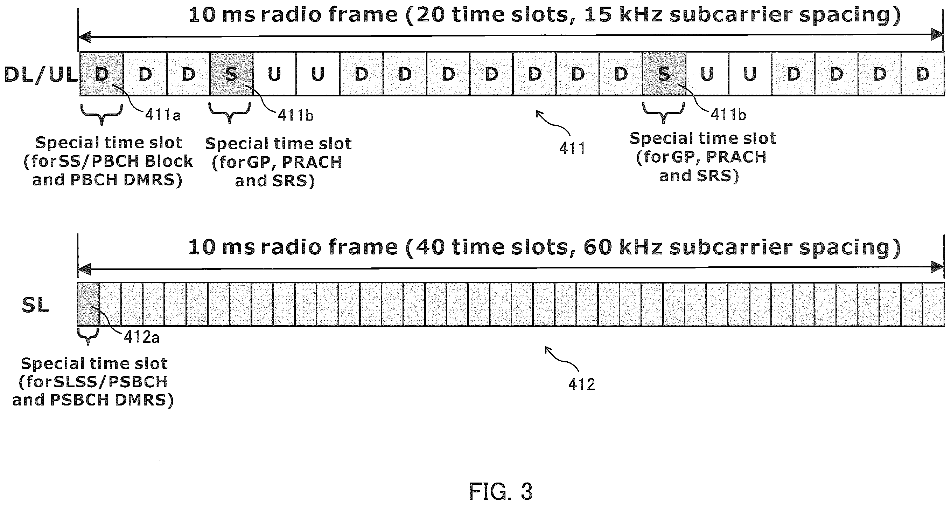

FIG. 3 is an illustration showing another example of radio frames of downlink (DL) and uplink (UL) of a Uu communication and a Sidelink communication (SL) in the communication system according to the present embodiment. In the example of FIG. 3, the DL and the UL are operated by the TDD (Time Division Duplex) in the same frequency band, and a SL is operated by an independent frequency band different from the DL and the UL.

In FIG. 3, a radio frame 411 shared for the DL and the UL has a predetermined subcarrier interval (15 kHz in the illustrated example), and has a predetermined time length (10 ms in the illustrated example) consisting of a predetermined number of time slots (20 pieces in the illustrated example).

A leading time slot 411a in the shared radio frame 411 is a special time slot that includes a block (SSB) consisting of a downlink SS and a PBCH, and a PBCH_DMRS. OFDM symbols used for downlink PDCCH, PDSCH and DMRS can be assigned to plural time slots 411c denoted by "D" in the figure. Each of two time slots 411b denoted by "S" in the figure is a special time slot that includes an uplink GP (Guard Period), a PRACH and an SRS (Sounding Reference Signal). OFDM symbols used for uplink PUCCH, PUSCH and DMRS can be assigned to plural time slots 411d denoted by "U" in the figure. In time slot in which resource assignment to PUSCH is performed, control information to be transmitted by the PUCCH may be multiplexed on the PUSCH without using the PUCCH.

In FIG. 3, a SL radio frame 412 has a predetermined subcarrier interval (60 kHz in the illustrated example), and has a predetermined time length (10 ms in the illustrated example) consisting of a predetermined number of time slots (40 pieces in the illustrated example).

A leading time slot 412a in the SL radio frame 412 is a special time slot that includes an SLSS, a PSBCH, and a PSBCH_DMRS used for the synchronization of Sidelink communication. Other time slots 412b can be assigned OFDM symbols used for the PSCCH, the PSFCH as a feedback channel, the PSSCH and the DMRS.

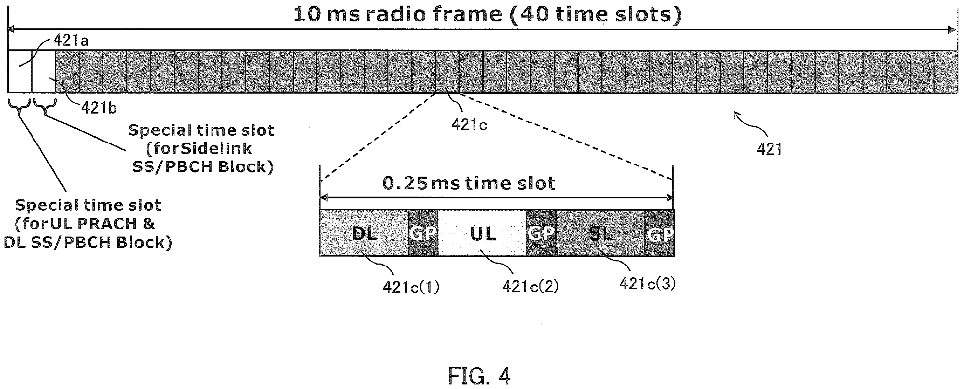

FIG. 4 is an illustration showing yet another example of radio frames of downlink (DL) and uplink (UL) of a Uu communication and a Sidelink communication (SL) in the communication system according to the present embodiment. In the example of FIG. 4, the DL, the UL and the SL are operated by the TDD (Time Division Duplex) in the same frequency band.

In FIG. 4, a radio frame 421 shared for the DL, the UL and the SL has a predetermined subcarrier interval (60 kHz in the illustrated example), and has a predetermined time length (10 ms in the illustrated example) consisting of a predetermined number of time slots (40 pieces in the illustrated example). A leading time slot 421a is a special time slot that includes an uplink PRACH, a block (SSB) consisting of a downlink SS and a PBCH, and a PBCH_DMRS. The second time slot 421b from the beginning is a special time slot that includes SS and PBCH blocks used for synchronization of the Sidelink communication.

Each of the other plural time slots of the shared radio frame 421 has a time slot 421c(1) for DL, a time slot 421c(2) for UL, and a time slot 421c(3) for SL separated by a GP (Guard Period). OFDM symbols used for the downlink PDCCH and PDSCH can be assigned to the time slot 421c(1) for DL. OFDM symbols used for uplink PUCCH and PUSCH can be assigned to the time slot 421c(2) for UL. In time slot in which resource assignment to the PUSCH is performed, control information to be transmitted by the PUCCH may be multiplexed on the PUSCH without using the PUCCH. OFDM symbols used for the PSCCH and the PSSCH can be assigned to the time slot 421c(3) for SL.

It is noted that, in other examples of radio resources, some of the resources for UL that are standardized in the LTE D2D and the like may be used as resources for the SL.

As an inter-terminal synchronization method for determining and setting the transmission/reception timing of radio frames when performing the inter-terminal direct communication by the Sidelink communication method, the UEs 20(1) to 20(3) of vehicles 30(1) to 30(3) can select, for example, from the Uu synchronization method as the first synchronization method and the SLSS synchronization method as the second synchronization method. Further, as another synchronization method, a GNSS synchronization method may be used.

The Uu synchronization method is a method in which a common signal such as Primary Synchronization Signal (PSS) or Secondary Synchronization Signal (SSS) periodically transmitted by the base station 10 of the mobile communication network (cellular network) for a cell search and a DL synchronization establishment on the terminal side is used as a reference for an inter-terminal synchronization. The SL synchronization method realizes the inter-terminal synchronization using an SLSS, and is used in case that other synchronization references cannot be used, such as in tunnels or areas outside the base station coverage area. On the other hand, the GNSS synchronization method is a method in which a GNSS (Global Navigation Satellite System) receiver as current position obtainment means provided in the UE 20 uses a time reference obtained by receiving radio waves from GNSS satellites as a reference for the inter-terminal synchronization, and the signal source of the time reference is the GNSS receiver within the apparatus itself.

For example, the UE 20 of the vehicle 30 determines the transmission/reception timing of the radio frame of the Sidelink communication method using the Uu synchronization method in the service area of the cell of the base station 10, and determines the transmission/reception timing of the radio frame of the Sidelink communication method using the SLSS synchronization method, because the common signal from the base station and other reference signal sources for synchronization cannot be used outside the service area of the cell of the base station 10.

As a radio resource (time slot) assignment control mode in the Sidelink communication method exemplified in FIG. 2 to FIG. 4 in the radio communication system with the configuration described above, there are an SL Mode-1 (hereinafter, it is also called "Mode-1" for short) as a first mode in which the base station 10 assigns SL radio resources, and an SL Mode-2 (hereinafter, it is also called "Mode-2" for short) as a second mode in which each UE 20 autonomously selects SL radio resources. The Mode-1 and Mode-2 can be selected and applied to each of the group (group) configured with the UEs 20 of plural vehicles 30. The group (group) may be statically formed with the plural UEs predetermined in advance, or may be ad hoc formed with plural UEs located close to each other.

### [Selection control of radio-resource assignment control mode]

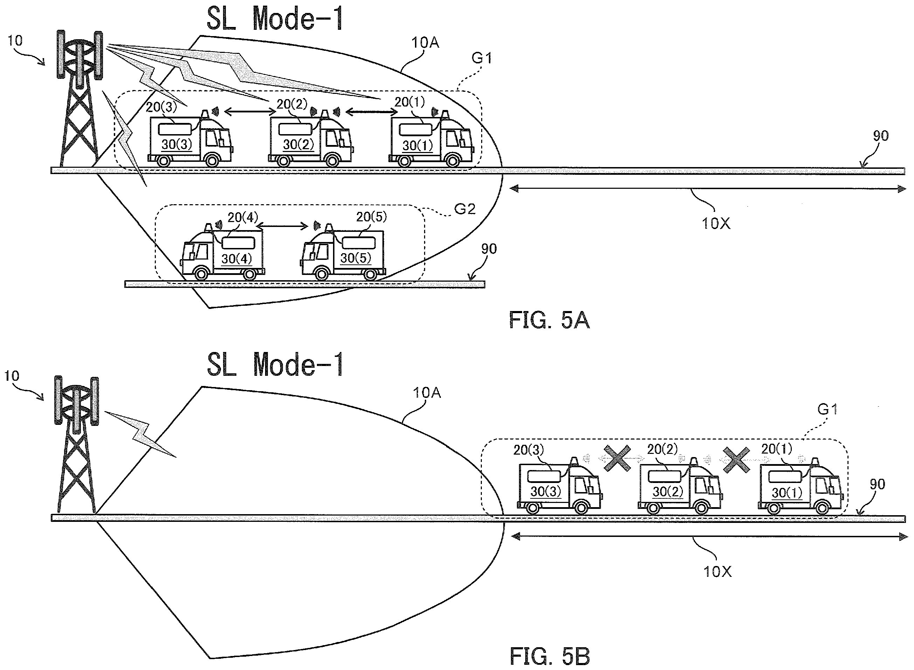

FIG. 5A and FIG. 5B are illustrations showing an example of a first radio-resource assignment control mode (Mode-1) in the communication system according to the embodiment. The Mode-1 has an advantage of realizing an efficient direct communication between UEs 20 (inter-terminal direct communication) by an Sidelink radio resource assignment control from the base station 10 in the service area of the cell 10A of the base station 10 shown in FIG. 5A. In the service area of the cell 10A of the base station 10, by using radio resources assigned by the Sidelink radio resource assignment control from the base station 10, the UEs 20(1) to 20(3) of the vehicles 30(1) to 30(3) belonging to a first group G1 can perform an inter-terminal direct communication with each other, and the UEs 20(4) and 20(5) of the vehicles 30(4) and 30(5) belonging to a second group G2 can perform an inter-terminal direct communication with each other.

However, in the Mode-1, since the synchronization and selection of radio resources necessary for the inter-terminal direct communication depend on synchronization signals and control signals transmitted by the base station 10, it cannot be applied an outside service area 10X of the cell 10A of the base station 10 as shown in FIG. 5B, so there is a problem that the UEs 20(1) to 20(3) of the vehicles 30(1) to 30(3) belonging to the group G1 cannot perform an inter-terminal direct communication of Sidelink.

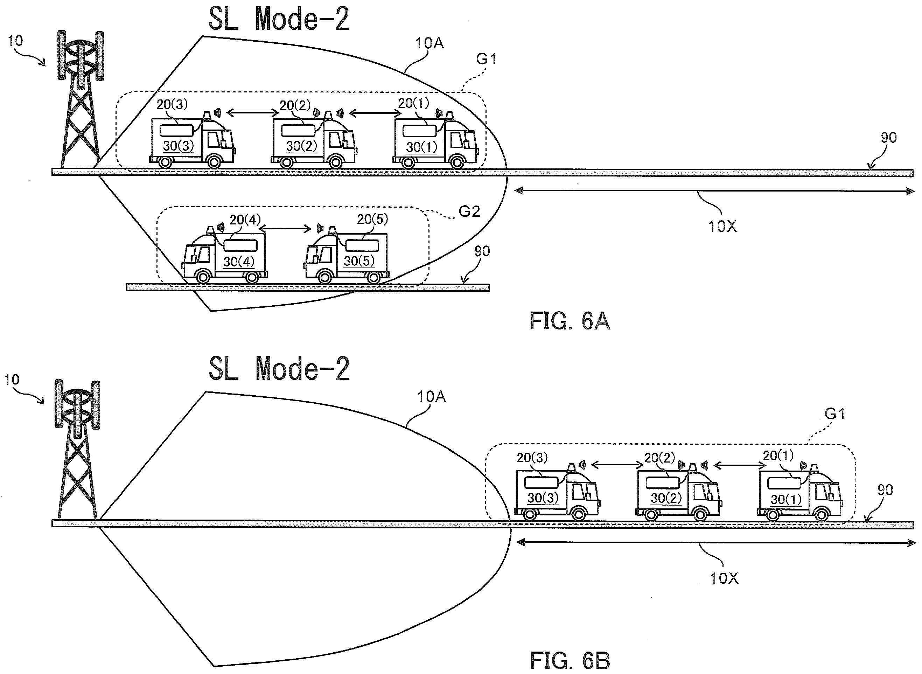

FIG. 6A and FIG. 6B are illustrations showing an example of a second radio-resource assignment control mode (Mode-2) in the communication system according to the embodiment. In the Mode-2, even in the service area of the cell 10A of the base station 10 shown in FIG. 6A, each of the UEs 20(1) to 20(3) of the vehicles 30(1) to 30(3) belonging to the group G1 can autonomously detect or randomly select necessary radio resources without relying on the base station 10, and perform an inter-terminal direct communication. Similarly, each of the UEs 20(4) and 20(5) of the vehicles 30(4) and 30(5) belonging to the group G2 can autonomously detect or randomly select necessary radio resources without relying on the base station 10, and perform an inter-terminal direct communication. Further, in the Mode-2, even the outside service area 10X of the cell 10A of the base station 10 as shown in FIG. 6B, each of the UEs 20(1) to 20(3) of the vehicles 30(1) to 30(3) can autonomously detect or randomly select necessary radio resources without relying on the base station 10, autonomously assign them to each UE, and perform an inter-terminal direct communication.

However, in the Mode-2, if there are many UEs that respectively perform an autonomous inter-terminal direct communication in particular, signals transmitted by the UEs collide with each other and the ratio of mutual interference increases, and as a result, there is a problem that the quality of inter-terminal direct communication of Sidelink tends to deteriorate.

Therefore, in the present embodiment, it is confirmed whether or not the plural UEs 20 in the same group G1 are located in the service area of the cell 10A of the base station 10, have completed a radio connection setup with the base station 10 and are in a synchronized state in which the downlink and uplink are synchronized with the base station 10, and a control is performed to dynamically switch between the radio-resource assignment control modes (Mode-1, Mode-2) for assigning radio resources for the inter-terminal direct communication to the plural UEs 20 in the same group, based on the confirmation result. By performing such control, it is possible to make use of each other's strengths while compensating for each other's disadvantages of the Mode-1 and the Mode-2.

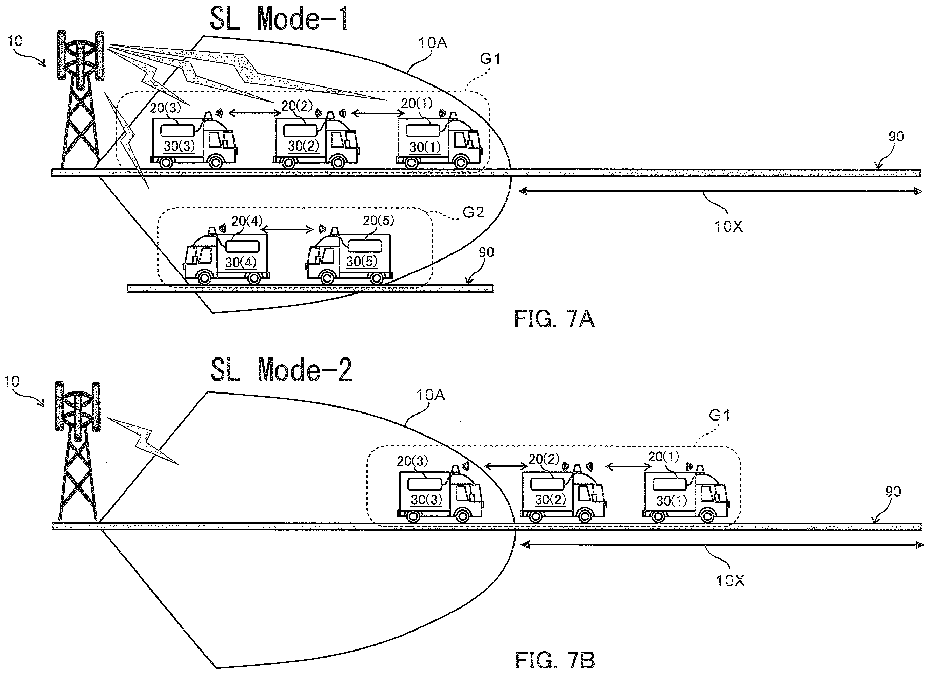

FIG. 7A and FIG. 7B are illustrations showing an example of a dynamic switching control of radio-resource assignment control modes (Mode-1, Mode-2) in the communication system according to the embodiment. For example, as shown in FIG. 7A, in the case of confirming that all of the UEs 20 of the plural vehicles 30 belonging to the same group G1 are located in the service area of the cell 10A of the base station 10, have completed the radio connection setup with the base station 10 and are in a synchronized state in which the downlink and uplink are synchronized with the base station 10, the CU 120 or the MEC apparatus 140 of the base station 10 performs a control to switch the radio-resource assignment control mode of the Sidelink communication from the initial setting Mode-2 (the second mode) to the Mode-1 (the first mode), and to transmit resource control information (SL resource control information) for inter-terminal direct communication, which includes a first-mode allowed message (Mode-1 Allowed) that allows the Mode-1 operation, to the plural UEs 20(1) to 20(3) in the group G1.

On the other hand, in the present embodiment, as shown in FIG. 7B, in the case of confirming that at least one UE (UE 20(1) and UE 20(2) in the illustrated example) of the UEs 20 of the plural vehicles 30 belonging to the same group G1 is located the outside service area 10X of the cell 10A of the base station 10 and is in an asynchronous state in which the downlink and uplink are not synchronized with the base station 10, the CU 120 or MEC apparatus 140 of the base station 10 performs a control to keep the radio-resource assignment control mode for Sidelink communication at the initial setting Mode-2.

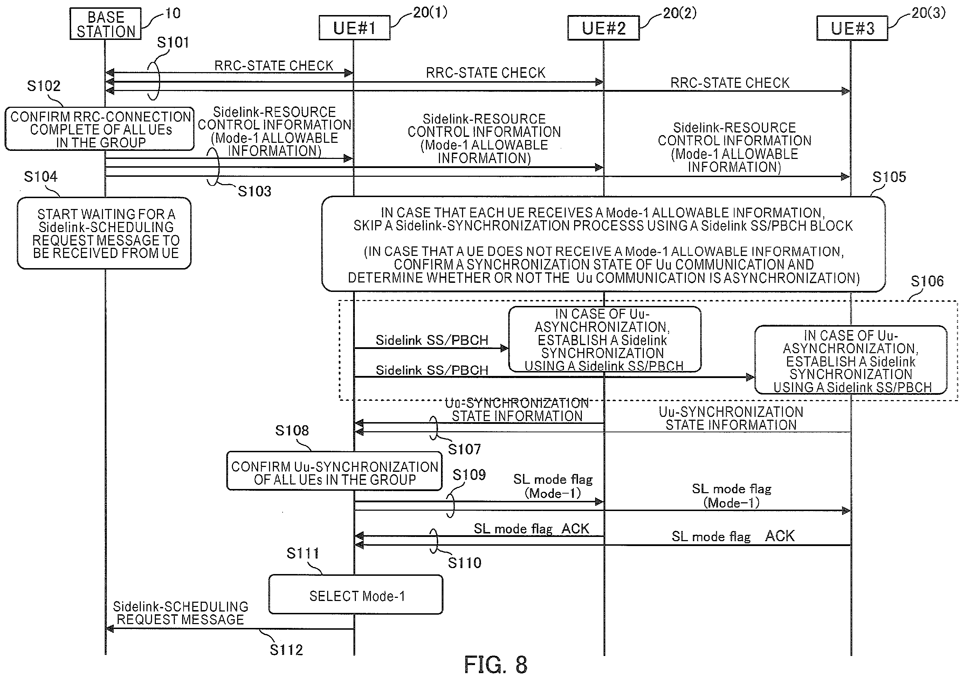

FIG. 8 is a sequence diagram showing an example of a dynamic switching control from a second radio-resource assignment control mode (SL Mode-2) to a first radio-resource assignment control mode (SL Mode-1) in the communication system according to the present embodiment. Each of the three UEs 20(1), 20(2) and 20(3) in FIG. 8 is a UE respectively mounted on the vehicles 30(1), 20(2) and 20(3) that are running in a row on the road 90 in FIG. 1. A single group (group) is formed by these UEs 20(1), 20(2), and 20(3). The radio-resource assignment control mode for Sidelink communication before performing the dynamic switching control in FIG. 8 is the initial setting Mode-2.

In FIG. 8, first, an RRC (radio resource control) state check as a radio-connection state check is performed between the plural UEs 20(1), 20(2) and 20(3) belonging to the group G1 and the base station 10 (S101). The CU 120 or MEC apparatus 140 of the base station 10 can confirms that all the UEs 20(1), 20(2) and 20(3) belonging to the group G1 are in an "RRC_CONNECTED" state, that is, the UEs 20(1), 20(2) and 20(3) are located in the service area of the cell 10A of the base station 10 and are in a synchronized state with the base station 10, based on the result of the RRC state check (S102).

Since the UEs 20(1), 20(2) and 20(3) of the plural vehicles 30(1), 30(2) and 30(3) are moving, the confirmation of whether or not each of the UEs 20(1), 20(2) and 20(3) is located in the service area of the cell 10A of the base station 10, and the confirmation of whether or not between each of the UEs 20(1), 20(2), 20(3) and the base station 10 are in a synchronized state are periodically performed.

In the case of confirming that the UEs 20(1), 20(2) and 20(3) are located in the service area of the cell 10A of the base station 10 and a radio connection setting including a synchronization process has been completed with the base station 10 (S102), the CU 120 or MEC apparatus 140 of the base station 10 transmits resource control information (Sidelink-resource control information) for inter-terminal direct communication including Mode-1 allowable information ("Mode-1 Allowed") as a first mode allowable message that allows an Mode-1 operation, to each of the UEs 20(1), 20(2) and 20(3) (S103). If the Mode-1 allowable information is "1: Mode-1 Allowed", it can be confirmed that the Mode-1 operation is allowed, and if it is "0: Mode-1 Not Allowed", it can be confirmed that the Mode-1 operation is not permitted.

The resource control information (SL resource control information) includes a UE group ID capable of identifying the group to which the UEs 20(1), 20(2) and 20(3) belong, which are control target UEs whose radio-resource assignment control mode is switched. With this target UE group ID, in case that the plural UE groups exist in the cell of the base station 10, it is possible to limit the target UE group for which the radio-resource assignment control mode of Sidelink communication is switched to the Mode-1. It is noted that, instead of including the UE group ID in the resource control information (SL resource control information), individual-terminal identification information (UE ID) capable of identifying the control target UE whose radio-resource assignment control mode is to be switched, may be included. The above-mentioned Layer-2 ID may be used as the individual-terminal identification information.

After transmitting the Sidelink-resource control information to each of the UEs 20(1), 20(2) and 20(3), the CU 120 or MEC apparatus 140 of the base station 10 starts waiting for a request message (Sidelink-scheduling request message) requesting a resource assignment control on the basis of the Mode-1 from each UE (S104).

In case that the Mode-1 allowable information that allows the Mode-1 operation from the CU 120 or MEC apparatus 140 of the base station 10 is received, each of the UEs 20(1), 20(2) and 20(3) skips a Sidelink synchronization process using an SS/PBCH (SLSS/PSBCH) block of Sidelink communication (S105).

In case that the Mode-1 allowable information that allows the Mode-1 operation is not received, each of the UEs 20(1), 20(2) and 20(3) confirms a synchronization status of Uu communication and determines whether or not the Uu communication is asynchronous. In case that the Uu communication is asynchronous, each of the UEs 20(1), 20(2) and 20(3) performs a process for maintaining the initial setting Mode-2 as the radio-resource assignment control mode of Sidelink communication (S106). In particular, the leader UE 20(1) transmits the SS/PBCH (SLSS/PSBCH) block of Sidelink communication to the member UEs 20(2) and 20(3), and the member UEs 20(2) and 20(3) perform a process for establishing a synchronization of Sidelink communication based on the SS/PBCH (SLSS/PSBCH) block of Sidelink communication received from the leader UE 20(1).

In the S105 described above, in case that each of the UEs 20(1), 20(2) and 20(3) receives the Mode-1 allowable information, the leader UE 20(1) receives Uu-synchronization- state information transfer that indicates the synchronized state of Uu communication, from all other member UEs 20(2) and 20(3) belonging to the same group, and determines whether or not each of the member UEs 20(2), and 20(3) (Uu) is in a Uu-communication synchronized state (S107). The Uu-synchronization-state information transfer includes the aforementioned UE group ID and the Uu-synchronization-state information. If the Uu-synchronization- state information is "1: Uu In-Sync", it can be confirmed that the Uu communication is in a synchronized state, and if it is "0: Uu Out-of-Sync", it can be confirmed that the Uu communication is in an asynchronous state. By receiving the Uu-synchronization-state information transfer including the UE group ID, the leader UE 20(1) can confirm the member UEs regarding whether or not they can perform the Mode-1 operation with each other, further, in case that the plural UE groups exist in the cell of the base station 10, it is possible to limit the target UE group for which the radio-resource assignment control mode of Sidelink communication is switched to the Mode-1.

After confirming that all of the other member UEs 20(2) and 20(3) belonging to the same group are in a synchronized state of Uu communication (S108), the leader UE 20(1) transmits a mode designation message (SL mode flag: Mode-1) designating the Mode-1, to each of the member UEs 20(2), and 20(3) (S109).

The leader UE 20(1) confirms whether or not all of the other member UEs 20(2) and 20(3) belonging to the same group have successfully received the mode designation message (SL mode flag: Mode-1) designating the Mode-1. After receiving the SL mode flag acknowledgment (ACK) indicating the successful reception of the mode designation message (SL mode flag: Mode-1) from all member UEs 20(2) and 20(3) in the group, the leader UE 20(1) selects the Mode-1 as the radio-resource assignment control mode (S111), and transmits a request message (SL-scheduling request message) requesting a resource assignment control on the basis of the Mode-1, to the CU 120 or MEC apparatus 140 of the base station 10 (S 112).

The leader UE 20(1) may confirm the successful reception of the mode designation message (SL mode flag: Mode-1) by receiving the SL HARQ acknowledgment (ACK) for the retransmission of the mode designation message (SL mode flag: Mode-1) from each of the member UEs 20(2), and 20(3), instead of the SL mode flag acknowledgment (ACK) described above.

After receiving the request message (SL-scheduling request message) from the leader UE 20(1), the CU 120 or MEC apparatus 140 of the base station 10 performs a resource assignment control on the basis of the Mode-1.

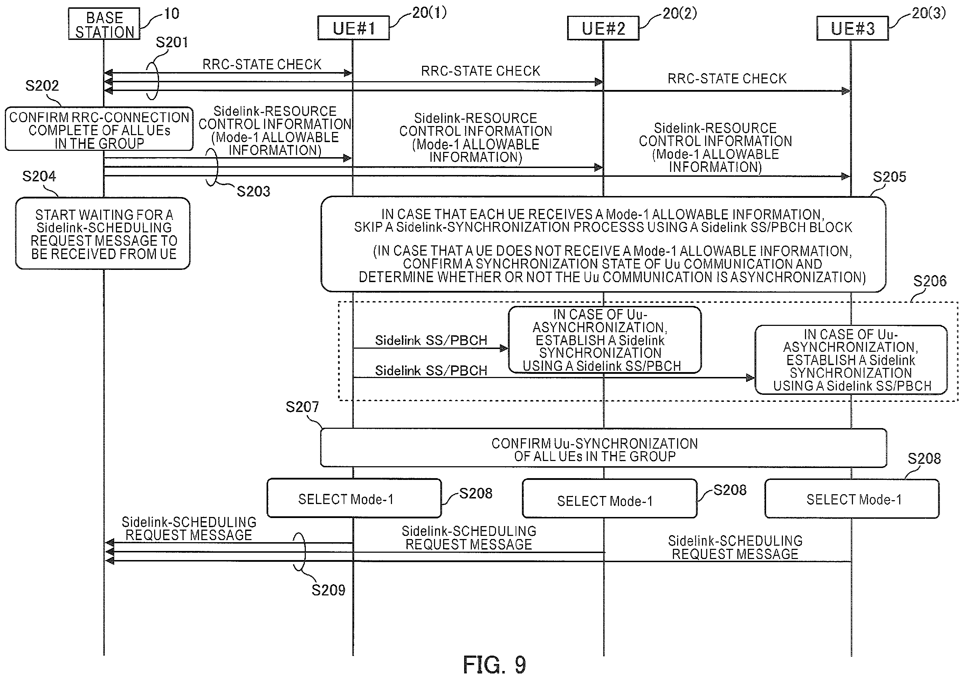

FIG. 9 is a sequence diagram showing another example of a dynamic switching control from the second radio-resource assignment control mode (SL Mode-2) to the first radio-resource assignment control mode (SL Mode-1) in the communication system according to the present embodiment. It is noted that S201 to S206 in FIG. 9 are the same as the S101 to S106 in FIG. 8 described above, so the description thereof is omitted.

In FIG. 9, after receiving the Mode-1 allowable information, all UEs 20(1), 20(2) and 20(3) in the group confirm that each of the UEs 20(1), 20(2) and 20(3) is in the Uu-communication synchronized state (S207), then select the Mode-1 as the radio-resource assignment control mode (S208), and transmit a request message (SL-scheduling request message) requesting the resource assignment control on the basis of the Mode-1, to the CU 120 or MEC apparatus 140 of the base station 10 (S209).

After receiving the request message (SL-scheduling request message) from each of the UEs 20(1), 20(2) and 20(3), the CU 120 or MEC apparatus 140 of the base station 10 performs the resource assignment control on the basis of the Mode-1.

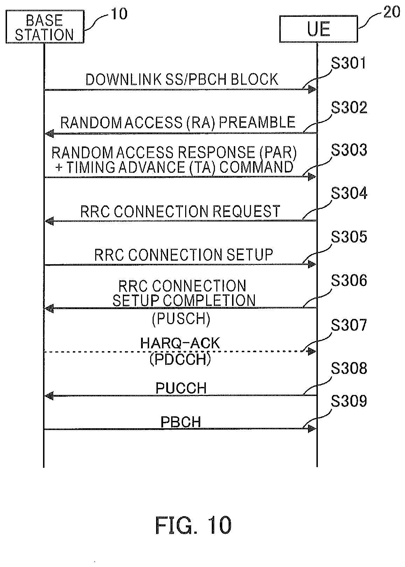

FIG. 10 is a sequence diagram showing an example of a determination of connection state between the UE 20 and the base station 10 in the communication system according to the present embodiment. The determination of connection state exemplified in FIG. 10 can be used in the RRC state check (S101, S201) of FIG. 8 and FIG. 9 described above.

In FIG. 10, the UE 20 performs an initial access procedure to the base station 10, by receiving the block of downlink SS (synchronization signal) and PBCH (broadcast channel) and the system information from the base station 10, transmitting a random access (RA) preamble (PRACH) to the base station 10, and receiving a random access response (RAR) and a timing advance (TA) command from the base station 10 (S301 to S304). The base station 10 transmits an RRC connection setup message to the UE 20 in response to the RRC (radio resource control) connection request message received from the UE 20 (S304, S305), and receives an RRC connection setup completion message transmitted by a PUSCH from the UE 20 (S306). By receiving the RRC connection setup complete message, the base station 10 can confirm that the target UE 20 is located in the service area of its own cell and that it is in DL/UL synchronized state with the UE 20 at the time of initial connection. After that, the base station 10 can determine the connection state with the UE 20, by confirming the CRC (cyclic redundancy check) decoding result of a PUCCH periodically transmitted by the UE 20 for a CQI (channel quality indicator) transmission or the like (S308).

By receiving the HARQ-ACK transmitted on the PDCCH from the base station 10 in response to the RRC-connection setup complete message, the UE 20 can confirm that the UE 20 is located in the service area of the cell of the base station 10 and is in DL/UL synchronized state with the base station 10 at the time of initial connection. After that, the UE 20 can determine the connection state with the base station 10 by confirming a decoding result of a PBCH periodically transmitted from the base station 10 (S309).

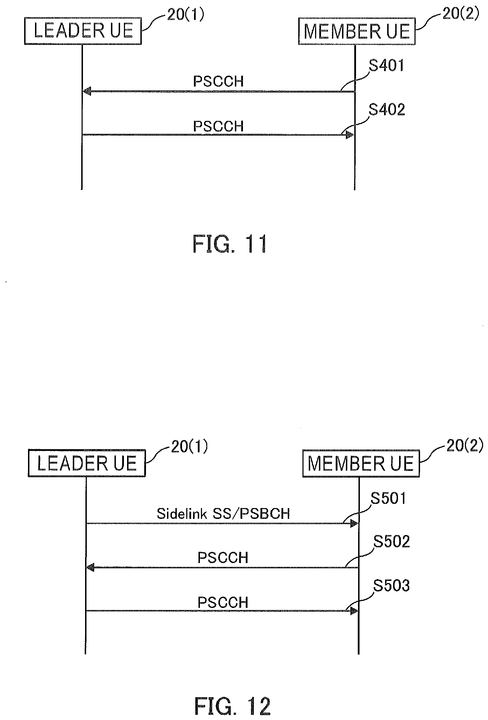

FIG. 11 is a sequence diagram showing an example of a determination of synchronization establishment and a connection state of Sidelink communication (SL) of the UE 20 located in the service area of the cell of the base station 10 in the communication system according to the present embodiment. In FIG. 11, in the service area of the cell of the base station 10, each UE 20 establishes a synchronization of Sidelink communication by establishing a DL and UL synchronization with the base station 10. The connection state of Sidelink communication in the service area can be confirmed by, for example, a successful reception of a PSCCH in the FL direction from the member UE 20(2) to the leader UE 20(1) (S401), and a successful reception of a PSCCH in the BL direction from the leader UE 20(1) to the member UE 20(2) (S402), as shown in FIG. 11.

FIG. 12 is a sequence diagram showing an example of a determination of synchronization establishment and a connection state of Sidelink communication (SL) of the UE 20 located outside the service area of the cell of the base station 10 in the communication system according to the present embodiment. Outside the service area of the cell of the base station 10, a communication with the base station does not occur, a short-distance communication is assumed compared to a Uu communication, and the Timing Advance of the SLSS synchronization method is not normally applied. For example, as shown in FIG. 12, a synchronization of Sidelink communication is established by transmitting and receiving the SS/PBCH

(SLSS/PSBCH) of Sidelink communication from the leader UE 20(1) to the member UE 20(2) (S501). The connection state of Sidelink communication outside the service area can be confirmed by, for example, a successful reception of a PSCCH in the FL direction from the member UE 20(2) to the leader UE 20(1) (S502), and a successful reception of PSCCH in the BL direction from the leader UE 20(1) to the member UE 20(2) (S503), as shown in FIG. 12.

As described above, according to the present embodiment, in the case of performing the inter-terminal direct communication (Sidelink communication) in the group formed by the plural UEs 20(1), 20(2), and 20(3) that can communicate via the base station 10 of the mobile communication network, even when the number of UEs in the same group increases, it is possible to reliably perform a low latency and highly reliable inter-terminal direct communication in the same group, by appropriately selecting the radio-resource assignment control mode for assigning radio resources for the inter-terminal direct communication to the plural UEs 20(1), 20(2) and 20(3) in the same group.

### [HARQ retransmission control in data transmission via inter-terminal direct communication]

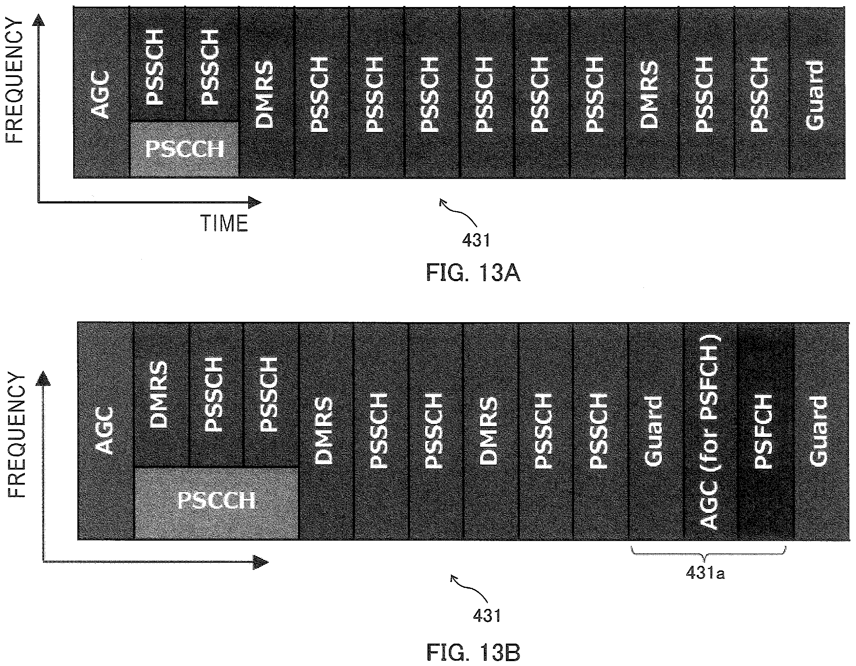

Each of FIG. 13A and FIG. 13B is an illustration showing an example of a configuration example of radio resources (RE) of a time slot 431 at the time of initial transmission and at a time of HARQ retransmission of SL data transmission according to a reference example. An AGC (automatic gain control), a PSCCH, PSSCHs, a DMRS, and a Guard (guard period) are assigned to the leading portion of the time slot 43 of SL data transmission. The AGC is information for controlling the gain of the reception amplifier so that the reception amplifier of the reception-side UE does not saturate. At the time of the initial transmission of SL data transmission in FIG. 13A, a data to be transmitted is set in any one of the plural PSSCHs in the time slot 431. At the time of the HARQ retransmission of SL data transmission in FIG. 13B, since a radio resource group 431a for HARQ retransmission including the PSFCH for returning the HARQ response message (HARQ-ACK or HARQ-NACK) and the Guard and the AGC for the PSFCH is inserted, radio resources that cannot be used for SL data transmission occur.

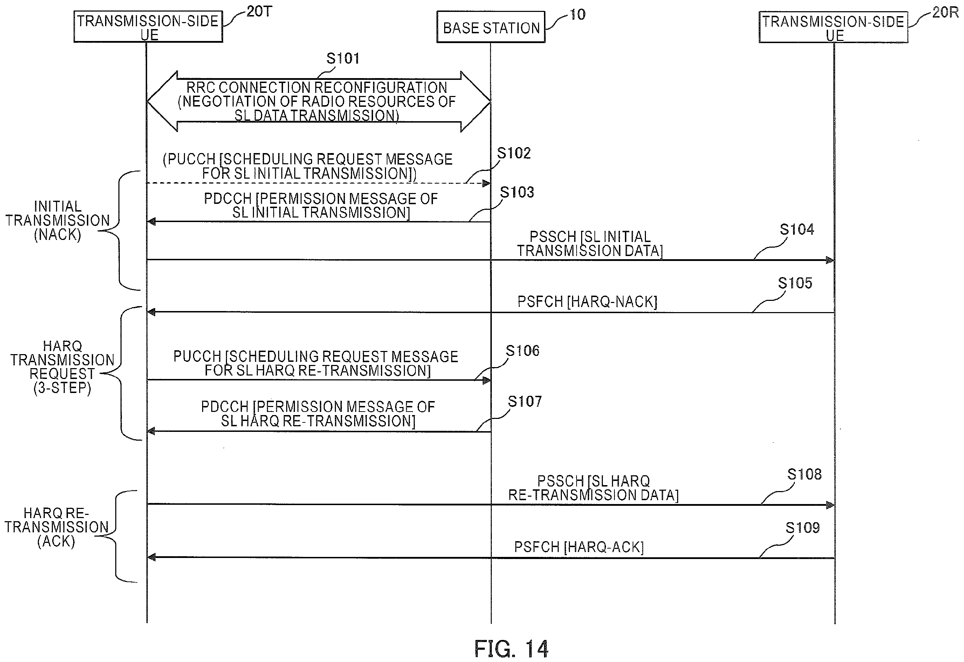

FIG. 14 is a sequence diagram showing an example of an initial transmission and an HARQ retransmission of SL data transmission during the SL Mode-1 operation according to a reference example. In FIG. 14, the transmission-side UE 20T performs an RRC connection reconfiguration (RRC Reconfiguration Procedure) with the base station 10, and performs a negotiation for transmission/reception of scheduling request messages in data transmission by the SL Mode-1 (S101).

When the RRC connection reconfiguration with the base station 10 is completed, the transmission-side UE 20T transmits a scheduling request (Scheduling Request) message requesting a radio resource assignment for the initial transmission of SL data transmission to the base station 10 using the PUCCH (S102), and upon receiving a permission (Grant) message including information on radio resources assigned for the initial transmission from the base station 10 using the PDCCH (S103), transmits the initial transmission data to the reception-side UE 20R using the PSSCH that is set in the radio resource (S104).

When the reception-side UE 20R fails to receive the initial transmission data, the reception-side UE 20R returns a HARQ retransmission request including an HARQ-NACK (negative acknowledgment) to the transmission-side UE 20T using the PSFCH set in a part of the radio resources (for example, radio resource group 431a in FIG. 13B) assigned for the initial transmission of SL (S105). The transmission-side UE 20T that has received the HARQ-NACK performs a feedback transmission of a scheduling request message for requesting a radio resource assignment for the HARQ retransmission of SL to the base station 10 using the PUCCH (S106), and upon receiving a permission (Grant) message including information on the assigned radio resource from the base station 10 using the PDCCH (S107), transmits the HARQ retransmission data to the reception-side UE 20T using the PSSCH set in the radio resource (S108). When the reception-side UE 20R successfully receives the HARQ retransmission data, the reception-side UE 20R returns an HARQ-ACK (acknowledgment) to the transmission-side UE 20T using the PSFCH set in a part of the radio resources (for example, radio resource group 431a in FIG. 13B) assigned for the HARQ retransmission of SL (S109).

In the reference example of FIG. 14, when the reception-side UE 20R fails to receive the initial transmission data of SL, since a three-stage intermediate signaling process of the reception of HARQ retransmission request including HARQ-NACK (S105), the feedback transmission of scheduling request message (S106) and the reception of the permission (Grant) message (S107) are required, by the time that the transmission-side UE 20T transmits an HARQ retransmission data to the reception-side UE 20R, an HARQ retransmission latency increases.

Therefore, in the present embodiment, as shown below, when the reception-side UE 20R fails to receive the initial transmission data of SL, the HARQ retransmission latency is reduced by making the intermediate signaling process until the transmission-side UE 20T transmits the HARQ retransmission data to the reception-side UE 20R in two stages.

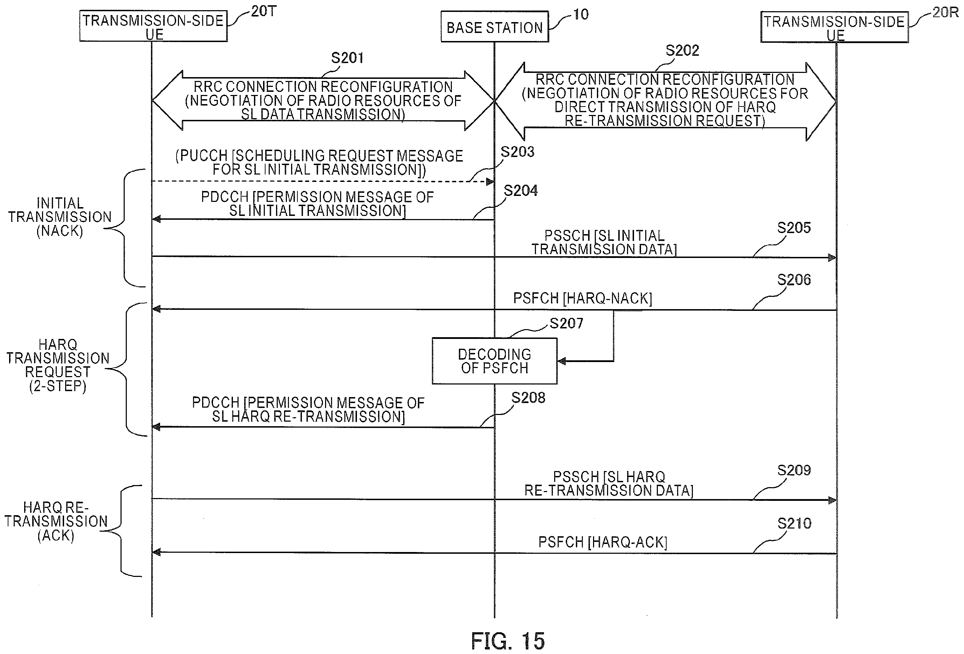

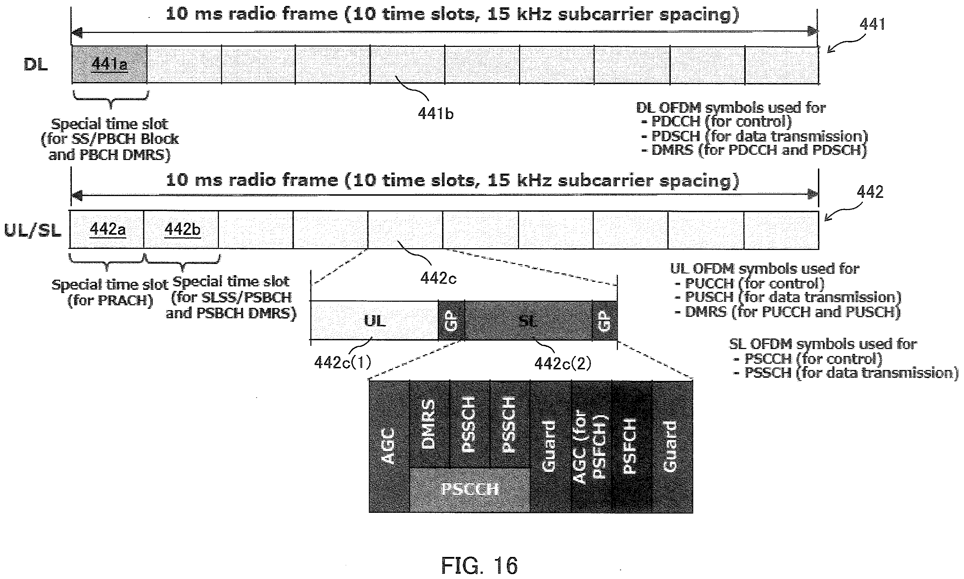

FIG. 15 is a sequence diagram showing an example of an initial transmission and an HARQ retransmission of SL data transmission during the SL Mode-1 operation in the communication system according to the embodiment. FIG. 16 is an illustration showing an example of radio frames of downlink (DL) and uplink (UL) of the Uu communication and the Sidelink communication (SL) in the data transmission of FIG. 15. It is noted that in FIG. 15, the description of the process common to the aforementioned FIG. 14 is omitted.

In FIG. 15, when performing a negotiation for transmission/reception of the scheduling request message in data transmission by the SL Mode-1 between the transmission-side UE 20T and the base station 10 (S201), an RRC connection reconfiguration between the reception-side UE 20R and the base station 10 is performed, and a negotiation for transmission/reception of the scheduling request message when performing a direct feedback (FB) transmission of the HARQ retransmission request from the reception-side UE 20R to the base station 10 is performed (S202).

When the reception-side UE 20R fails to receive the initial transmission data, the reception-side UE 20R returns the HARQ retransmission request including an HARQ-NACK (negative acknowledgment) to the transmission-side UE 20T using a PSFCH set in a part of the UL/SL shared radio frame (for example, radio resource group 431a for SL in the fifth slot 442c(2) of the radio frame 442 in FIG. 16) assigned for the initial transmission of SL (S206).

It is noted that, in the AGC (for PSFCH) interval (see FIG. 16) transmitted prior to the PSFCH of the HARQ retransmission request from the reception-side UE 20R, in order to enable the base station 10 to receive the PSFCH without using a Timing Advance and the reference signal for demodulation, a predetermined signal sequence whose reception timing can be detected (reception timing can be estimated) at the base station 10 is multiplexed and transmitted. As this signal sequence, for example, a CAZAC (Constant Amplitude and Zero Auto-Correlation Code) sequence such as a ZC (Zadoff-Chu) sequence, which is also used in a RACH (Random Access Channel), etc., can be used.

The base station 10 monitors the PSFCH in the UL/SL shared radio frame addressed to the transmission-side UE 20T, which is transmitted from the reception-side UE 20R. After decoding the PSFCH and confirming the HARQ retransmission request including the HARQ-NACK (negative acknowledgment) (S207), the base station 10 transmits a permission (Grant) message including information on radio resources assigned for the SL HARQ retransmission, to the transmission-side UE 20T using the PDCCH, without waiting for the scheduling request (SR) message from the transmission-side UE 20T (S208).

The transmission-side UE 20T transmits the HARQ retransmission data to the reception-side UE 20R using the PSSCH set in the assigned radio resource (S209). When the reception-side UE 20R successfully receives the HARQ retransmission data, the reception-side UE 20R returns an HARQ-ACK (acknowledgment) to the transmission-side UE 20T using the PSFCH set in a part of the radio resource assigned for the HARQ retransmission of SL (S210).

According to the example in FIG. 15, when the reception-side UE 20R fails to receive the initial transmission data of SL, since only two stages of intermediate signaling process are required, which are the transmission/reception of messages from the reception-side UE 20R to the transmission-side UE T (S206) and the transmission/reception of messages from the base station 10, (S208), until the transmission-side UE 20T transmits the HARQ retransmission data to the reception-side UE 20R, the HARQ retransmission latency can be reduced.

According to the example in FIG. 15, no scheduling request (SR) for HARQ retransmission from the transmission-side UE 20T to the base station 10 is required, and the control overhead between the transmission-side UE 20T and the base station 10 can be reduced.

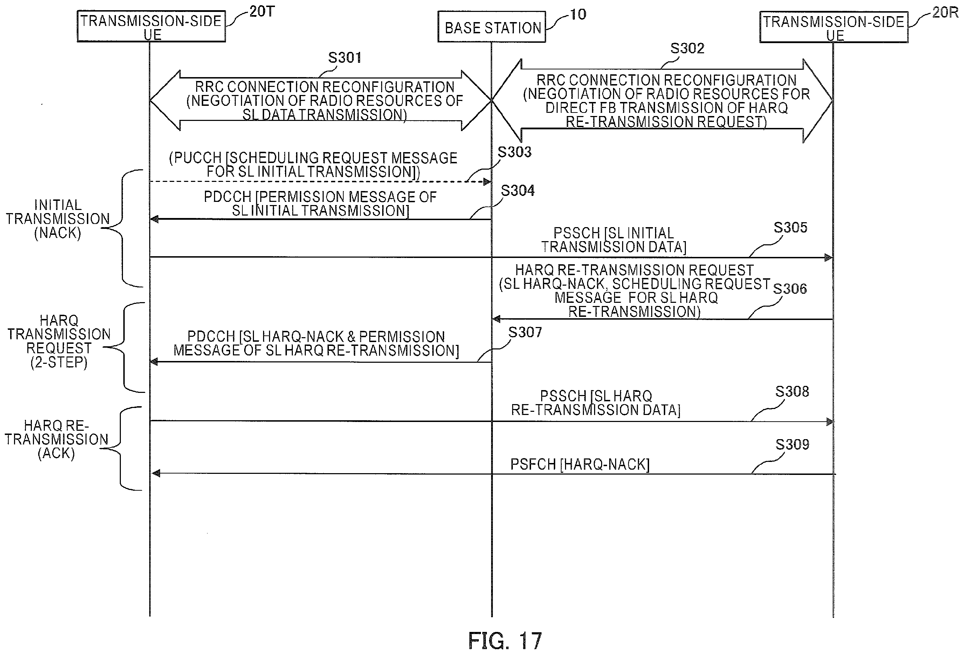

FIG. 17 is a sequence diagram showing another example of an initial transmission and an HARQ retransmission of SL data transmission during the SL Mode-1 operation in the communication system according to the embodiment. It is noted that in FIG. 17, the description of the process common to the aforementioned FIG. 14 is omitted.

In the example of FIG. 17, as radio frames for the downlink (DL) and uplink (UL) of the Uu communication and the Sidelink communication (SL), for example, the aforementioned radio frames exemplified in FIG. 2 to FIG. 4 can be used.

In FIG. 17, when performing a negotiation for transmission/reception of the scheduling request message in data transmission by the SL Mode-1 between the transmission-side UE 20T and the base station 10 (S301), an RRC connection reconfiguration between the reception-side UE 20R and the base station 10 is performed, and a negotiation for transmission/reception of the scheduling request message when performing a direct transmission of the HARQ retransmission request from the reception-side UE 20R to the base station 10 is performed (S302).

When the reception-side UE 20R fails to receive the initial transmission data, the reception-side UE 20R multiplexes the HARQ retransmission request (feedback message) including the SL HARQ-NACK (negative acknowledgment) and the scheduling request message of HARQ retransmission on the PUCCH or PUSCH set in a part of the UL radio frame, and directly transmits a feedback to the base station 10 (S306).

Upon receiving the HARQ retransmission request containing the SL HARQ-NACK (negative acknowledgment) and the scheduling request message of HARQ retransmission from the reception-side UE 20R, the base station 10 transmits the SL HARQ-NACK (negative acknowledgment) and the permission (Grant) message including information on the radio resources assigned for the SL HARQ retransmission, to the transmission-side UE 20T using the PDCCH (S307). The transmission-side UE 20T can obtain information on the SL HARQ-NACK via the base station 10 without using the PSFCH.

The transmission-side UE 20T transmits the HARQ retransmission data to the reception-side UE 20R using the PSSCH set in the assigned radio resource (S308). When the reception-side UE 20R successfully receives the HARQ retransmission data, the reception-side UE 20R returns the HARQ-ACK (acknowledgment) to the transmission-side UE 20T using the PSFCH set in a part of the radio resource assigned for the HARQ retransmission of SL (S309).

According to the example in FIG. 17, when the reception-side UE 20R fails to receive the initial transmission data of SL, since only two stages of intermediate signaling process are required, which are the direct transmission/reception of feedback messages from the reception-side UE 20R to the base station 10 (S306) and the transmission/reception of messages from the base station 10 to the transmission-side UE 20T (S307), until the transmission-side UE 20T transmits the HARQ retransmission data to the reception-side UE 20R, the HARQ retransmission latency can be reduced.

According to the example in FIG. 17, since there is no message transmission/reception for HARQ retransmission using the PSFCH from the reception-side UE 20R to the transmission-side UE 20T, it is possible to reduce the overhead associated with the PSFCH. Further, the radio resources for the AGC and Guard sections of the PSFCH can be reduced.

As described above, according to the present embodiment, it is possible to reduce the HARQ retransmission latency of SL during an operation of the assignment control mode in which the base station 10 assigns the radio resources for the SL communication between the terminals existing in the service area of the base station.

It is noted that, the process steps and configuration elements of the radio communication system, the mobile communication system, the control apparatus, the MEC apparatus, the base station and the radio terminal apparatus (terminal, terminal apparatus, user equipment (UE), mobile station, mobile device) described in the present description can be implemented with various means. For example, these process steps and configuration elements may be implemented with hardware, firmware, software, or a combination thereof.

With respect to hardware implementation, means such as processing units or the like used for establishing the foregoing steps and configuration elements in entities (for example, various kinds of radio communication apparatuses, Node B, eNode B, gNode B, terminal, hard disk drive apparatus, or optical disk drive apparatus) may be implemented in one or more of an application-specific IC (ASIC), a digital signal processor (DSP), a digital signal processing apparatus (DSPD), a programmable logic device (PLD), a field programmable gate array (FPGA), a processor, a controller, a microcontroller, a microprocessor, an electronic device, other electronic unit, computer, or a combination thereof, which are designed so as to perform a function described in the present specification.

With respect to the firmware and/or software implementation, each section used for establishing the foregoing configuration elements may be implemented with a program (for example, code such as procedure, function, module, instruction, etc.) for performing a function described in the present specification. In general, any computer/processor readable medium of materializing the code of firmware and/or software may be used for implementation of means such as processing units and so on for establishing the foregoing steps and configuration elements described in the present specification. For example, in a control apparatus and storage apparatus, the firmware and/or software code may be stored in a memory and executed by a computer or processor. The memory may be implemented within the computer or processor, or outside the processor. Further, the firmware and/or software code may be stored in, for example, a medium capable being read by a computer or processor, such as a random-access memory (RAM), a read-only memory (ROM), a non-volatility random-access memory (NVRAM), a programmable read-only memory (PROM), an electrically erasable PROM (EEPROM), a FLASH memory, a floppy (registered trademark) disk, a compact disk (CD), a digital versatile disk (DVD), a magnetic or optical data storage unit, or the like. The code may be executed by one or more of computers and processors, and a certain aspect of functionalities described in the present specification may by executed by a computer or processor.

The medium may be a non-transitory recording medium. Further, the code of the program may be executable by being read by a computer, a processor, or another device or an apparatus machine, and the format is not limited to a specific format. For example, the code of the program may be any of a source code, an object code, and a binary code, and may be a mixture of two or more of those codes.

The description of embodiments disclosed in the present specification is provided so that the present disclosures can be produced or used by those skilled in the art. Various modifications of the present disclosures are readily apparent to those skilled in the art and general principles defined in the present specification can be applied to other variations without departing from the spirit and scope of the present disclosures. Therefore, the present disclosures should not be limited to examples and designs described in the present specification and should be recognized to be in the broadest scope corresponding to principles and novel features disclosed in the present specification.

### REFERENCE SIGNS LIST

10: base station
10A: cell
10X: outside service area
14: MEC apparatus
20: UE (radio terminal apparatus)
21: antenna
30: vehicle
90: road
100: base station apparatus
101: antenna
102: antenna
122: CU controller
140: MEC apparatus

## Claims

1. A system for performing a selection control of a radio-resource assignment control mode when plural radio terminal apparatuses capable of communicating via a base station of a mobile communication network form a group and perform an inter-terminal direct communication,
wherein a radio-resource assignment control mode for assigning radio resources for an inter-terminal direct communication of plural radio terminal apparatuses belonging to the group is selectable from a first mode, in which the base station assigns radio resources for the inter-terminal direct communication of the plural radio terminal apparatuses, and a second mode, in which any radio terminal apparatus of the plural radio terminal apparatuses assigns radio resources for the inter-terminal direct communication of the plural radio terminal apparatuses, and
wherein the system comprises:
means for confirming whether or not all the plural radio terminal apparatuses belonging to the group are located in a cell of the base station, and are in a synchronized state in which a radio connection setup with the base station is completed and a downlink and an uplink are synchronized with the base station; and
means for transmitting resource control information on the inter-terminal direct communication including a first mode allowable message allowing an operation in the first mode, to the plural radio terminal apparatuses, in case of confirming that all the plural radio terminal apparatuses belonging to the group are in the synchronized state with the base station.

2. The system according to claim 1,
wherein the resource control information on the inter-terminal direct communication includes group identification information capable of identifying the group or terminal identification information for each of the plural radio terminal apparatuses belonging to the group.

3. The system according to claim 1 or 2,
wherein any one radio terminal apparatus of the plural radio terminal apparatuses belonging to the group, comprises:
means for confirming whether or not all the plural radio terminal apparatuses belonging to the group are in a synchronized state in which a downlink and an uplink are synchronized with the base station after completing a reception of resource control information on the inter-terminal direct communication;
means for transmitting a mode designation message designating the first mode to all the other radio terminal apparatuses, in case of confirming that all radio terminal apparatuses other than the own apparatus of the plural radio terminal apparatuses belonging to the group are in a synchronized state with the base station; and
means for confirming whether or not all the other radio terminal apparatuses succeeded in receiving the mode designation message.

4. The system according to claim 3,
wherein the one radio terminal apparatus or all the plural radio terminal apparatuses belonging to the group transmit a request message for requesting the resource assignment control on the basis of the first mode, to the base station side, in case that all the plural radio terminal apparatuses belonging to the group have succeeded in receiving the mode designation message.

5. The system according to claim 1 or 2,
wherein each of all the plural radio terminal apparatuses belonging to the group, comprising:
means for confirming whether or not all the plural radio terminal apparatuses belonging to the group are in a synchronized state, in which downlink and uplink are synchronized with the base station after completing a reception of the resource control information on the inter-terminal direct communication;
means for transmitting a mode designation message that designates the first mode to all the other radio terminal apparatuses, in case of confirming that all other radio terminal apparatuses other than the own apparatus of the plural radio terminal apparatuses belonging to the group are in the synchronized state with the base station; and
means for confirming whether or not all the other radio terminal apparatuses succeeded in receiving the mode designation message.

6. The system according to claim 5,
wherein each of all the plural radio terminal apparatuses belonging to the group transmits a request message for requesting a resource control of inter-terminal direct communication of all the plural radio terminal apparatuses belonging to the group, to the base station side, in case that all the plural radio terminal apparatuses belonging to the group succeeded in receiving the mode designation message.

7. The system according to any one of claims 3 to 6,
wherein the one radio terminal apparatus or all the plural radio terminal apparatuses belonging to the group confirm that all the other radio terminal apparatuses are in the synchronized state, by receiving synchronization-state information indicating in the synchronized state with the base station after completing the reception of the resource control information on the inter-terminal direct communication, from all the other radio terminal apparatuses.

8. The system according to claim 7,
wherein the one radio terminal apparatus or all the plural radio terminal apparatuses belonging to the group receive group identification information capable of identifying the group together with the synchronization-state information from all the other radio terminal apparatuses.

9. The system according to any one of claims 1 to 8,
wherein the group is fixedly formed by the plural radio terminal apparatuses predetermined in advance, or formed ad-hoc by plural radio terminal apparatuses located in close proximity each other.

10. The system according to any one of claims 1 to 9,
wherein the second mode is selected as the initial radio-resource assignment control mode.

11. The system according to any one of claims 1 to 9,
wherein the radio terminal apparatus is provided in each of plural vehicles that form the group and run on a moving path.

12. A radio terminal apparatus that can communicate via a base station of a mobile communication network, forms a group with one or more neighboring radio terminal apparatuses and performs an inter-terminal direct communication, the radio terminal apparatus comprising:
means for confirming whether or not all the plural radio terminal apparatuses belonging to the group are in a synchronized state in which downlink and uplink are synchronized with the base station after completing a reception of resource control information on the inter-terminal direct communication;
means for transmitting a mode designation message designating the first mode to all the other radio terminal apparatuses, in case of confirming that all the other radio terminal apparatuses other than the own apparatus of the plural radio terminal apparatuses belonging to the group are in the synchronized state with the base station; and
means for confirming whether or not all the other radio terminal apparatuses succeeded in receiving the mode designation message.

13. A vehicle of grouping with other vehicles and running on a moving path, comprising:
the radio terminal apparatus according to claim 12.

14. A control apparatus for performing a selection control of a radio-resource assignment control mode when plural radio terminal apparatus capable of communicating via a base station of a mobile communication network form a group and perform an inter-terminal direct communication,
wherein a radio-resource assignment control mode for assigning radio resources for an inter-terminal direct communication of plural radio terminal apparatuses belonging to the group is selectable from a first mode, in which the base station assigns radio resources for the inter-terminal direct communication of the plural radio terminal apparatuses, and a second mode, in which any radio terminal apparatus of the plural radio terminal apparatuses assigns radio resources for inter-terminal direct communication of the plural radio terminal apparatuses,
wherein the control apparatus comprises:
means for confirming whether or not all the plural radio terminal apparatuses belonging to the group are located in a cell of the base station, and are in a synchronized state in which a radio connection setup with the base station is completed and a downlink and an uplink are synchronized with the base station; and
means for transmitting resource control information on the inter-terminal direct communication including a first mode allowable message allowing an operation in the first mode to the plural radio terminal apparatuses, in case of confirming that all the plural radio terminal apparatuses belonging to the group are in the synchronized state with the base station.

15. The control apparatus according to any one of claim 14,
wherein the control apparatus is a CU (Central Unit) or a MEC (Multi-access Edge Computing) apparatus, which is provided in a base station of a mobile communication network or a node between the base station and a core network, or outside the core network.

16. A base station of a mobile communication network, comprising:
the control apparatus according to claim 14.

17. A method for performing a selection control of a radio-resource assignment control mode when plural radio terminal apparatuses capable of communicating via a base station of a mobile communication system form a group and perform an inter-terminal direct communication, including:
enabling a selection from a first mode, in which the base station assigns radio resources for an inter-terminal direct communication of the plural radio terminal apparatuses, and a second mode, in which any radio terminal apparatus of the plural radio terminal apparatuses assigns radio resources for inter-terminal direct communication of the plural radio terminal apparatuses, as a radio-resource assignment control mode for assigning radio resources for the inter-terminal direct communication of plural radio terminal apparatuses belonging to the group;
confirming whether or not all the plural radio terminal apparatuses belonging to the group are located in a cell of the base station, and are in a synchronized state in which a radio connection setup with the base station is completed and a downlink and an uplink are synchronized with the base station; and
transmitting resource control information on the inter-terminal direct communication including a first mode allowable message allowing an operation in the first mode to the plural radio terminal apparatuses, in case of confirming that all the plural radio terminal apparatuses belonging to the group are in the synchronized state with the base station.

18. A program for executing in a computer or a processor provided in a control apparatus for performing a selection control of a radio-resource assignment control mode when plural radio terminal apparatuses capable of communicating via a base station of a mobile communication system form a group and perform an inter-terminal direct communication, the program comprising:
a program code for enabling a selection from a first mode, in which the base station assigns radio resources for an inter-terminal direct communication of the plural radio terminal apparatuses, and a second mode, in which any radio terminal apparatus of the plural radio terminal apparatuses assigns radio resources for inter-terminal direct communication of the plural radio terminal apparatuses, as a radio-resource assignment control mode for assigning radio resources for the inter-terminal direct communication of plural radio terminal apparatuses belonging to the group;
a program code for confirming whether or not all the plural radio terminal apparatuses belonging to the group are located in a cell of the base station, and are in a synchronized state in which a radio connection setup with the base station is completed and a downlink and an uplink are synchronized with the base station; and
a program code for transmitting resource control information on the inter-terminal direct communication including a first mode allowable message allowing an operation in the first mode to the plural radio terminal apparatuses, in case of confirming that all the plural radio terminal apparatuses belonging to the group are in the synchronized state with the base station.

19. A program for executing in a computer or a processor provided in a radio terminal apparatus that can communicate via a base station of a mobile communication network, forms a group with one or more neighboring radio terminal apparatuses, and performs an inter-terminal direct communication, the program comprising:
a program code for confirming whether or not all the plural radio terminal apparatuses belonging to the group are in a synchronized state in which a downlink and an uplink are synchronized with the base station after completing a reception of resource control information on the inter-terminal direct communication;
a program code for transmitting a mode designation message designating the first mode to all the other radio terminal apparatuses, in case of confirming that all the other radio terminal apparatuses other than the own apparatus of the plural radio terminal apparatuses belonging to the group are in a synchronized state with the base station; and
a program code for confirming whether or not all the other radio terminal apparatuses succeeded in receiving the mode designation message.

20. A base station of a mobile communication network having a function of performing a communication with plural radio terminal apparatuses that perform an inter-terminal direct communication and are capable of controlling radio resources used for the inter-terminal direct communication, the base station comprising:
means for monitoring a channel for feedback from a reception-side radio terminal apparatus to a transmission-side radio terminal apparatus in a data transmission via the inter-terminal direct communication, and decoding the channel for feedback; and
means for notifying a permission message including radio resource information for HARQ retransmission, to the transmission-side radio terminal apparatus, when a result of the decoding of the channel for feedback includes a HARQ negative acknowledgment from the reception-side radio terminal apparatus.

21. A base station of a mobile communication network having a function of performing a communication with plural radio terminal apparatuses that perform inter-terminal direct communication and are capable of controlling radio resources used for the inter-terminal direct communication, the base station comprising:
means for receiving a feedback message including a HARQ negative acknowledgment and a radio-resource assignment request from a reception-side radio terminal apparatus in a data transmission via the inter-terminal direct communication; and
means for transmitting a permission message including the HARQ negative acknowledgment and radio resource information for HARQ retransmission to the reception-side radio terminal apparatus of the data transmission, in response to the feedback message.

22. A radio terminal apparatus having a function of performing a communication via a base station of a mobile communication network and a function of performing an inter-terminal direct communication with neighboring radio terminal apparatuses, the radio terminal apparatus comprising:
means for receiving a permission message including radio resource information for HARQ retransmission from the base station without receiving a HARQ negative acknowledgment from the neighboring radio terminal apparatuses, when a data transmission is performed to the neighboring radio terminal apparatuses via the inter-terminal direct communication; and
means for performing an HARQ retransmission of the data transmission to the neighboring radio terminal apparatuses in response to the permission message received from the base station without receiving the HARQ negative acknowledgment from the neighboring radio terminal apparatuses.

23. A radio terminal apparatus having a function of performing a communication via a base station of a mobile communication network and a function of performing an inter-terminal direct communication with neighboring radio terminal apparatuses, the radio terminal apparatus comprising:
means for receiving a data transmission from the neighboring radio terminal apparatuses via the inter-terminal direct communication; and
means for transmitting a feedback message including a HARQ negative acknowledgment for the data transmission and a radio-resource assignment request to the base station.

24. A radio terminal apparatus having a function of performing a communication via a base station of a mobile communication network and a function of performing an inter-terminal direct communication with neighboring radio terminal apparatuses, the radio terminal apparatus comprising:
means for receiving a permission message including a HARQ negative acknowledgment and radio resource information for HARQ retransmission from the base station without receiving a HARQ negative acknowledgment from the neighboring radio terminal apparatuses, when a data transmission is performed to the neighboring radio terminal apparatuses via the inter-terminal direct communication; and
means for performing an HARQ retransmission of the data transmission to the neighboring radio terminal apparatuses in response to the permission message received from the base station without receiving the HARQ negative acknowledgment from the neighboring radio terminal apparatuses.

25. A system comprising:
the base station according to claim 20; and
the radio terminal apparatus according to claim 22.

26. A system comprising:
the base station according to claim 21;
the radio terminal apparatus according to claim 23; and
the radio terminal apparatus according to claim 24.

27. A vehicle for running on a moving path, comprising:
the radio terminal apparatus according to any one of claims 22 to 24.

28. A method for performing an HARQ retransmission control in a data transmission via an inter-terminal direct communication, comprising:
monitoring a channel for feedback from a reception-side radio terminal apparatus to a transmission-side radio terminal apparatus in a data transmission via the inter-terminal direct communication, and decoding the channel for feedback; and
notifying a permission message including radio resource information for HARQ retransmission, to the transmission-side radio terminal apparatus when a result of the decoding of the channel for feedback includes a HARQ negative acknowledgment from the reception-side radio terminal apparatus.

29. A method for performing an HARQ retransmission control in a data transmission via an inter-terminal direct communication, the method comprising:
receiving a feedback message including a HARQ negative acknowledgment and a radio-resource assignment request from a reception-side radio terminal apparatus in a data transmission via the inter-terminal direct communication; and
transmitting a permission message including the HARQ negative acknowledgment and radio resource information for HARQ retransmission to the reception-side radio terminal apparatus of the data transmission in response to the feedback message.

30. A program for executing in a computer or a processor provided in a base station of a mobile communication network having a function of performing a communication with plural radio terminal apparatuses that perform an inter-terminal direct communication and are capable of controlling radio resources used for the inter-terminal direct communication, the program comprising:
a program code for monitoring a channel for feedback from a reception-side radio terminal apparatus to a transmission-side radio terminal apparatus in a data transmission via the inter-terminal direct communication, and decoding the channel for feedback; and
a program code for notifying a permission message including radio resource information for HARQ retransmission, to the transmission-side radio terminal apparatus when a result of the decoding of the channel for feedback includes a HARQ negative acknowledgment from the reception-side radio terminal apparatus.

31. A program for executing in a computer or a processor provided in a base station of a mobile communication network having a function of performing a communication with plural radio terminal apparatuses that perform an inter-terminal direct communication and are capable of controlling radio resources used for the inter-terminal direct communication, the program comprising:
a program code for receiving a feedback message including a HARQ negative acknowledgment and a radio-resource assignment request from a reception-side radio terminal apparatus in a data transmission via the inter-terminal direct communication; and
a program code for transmitting a permission message including the HARQ negative acknowledgment and radio resource information for HARQ retransmission to the reception-side radio terminal apparatus of the data transmission in response to the feedback message.

32. A program for executing in a computer or a processor provided in a radio terminal apparatus having a function of performing a communication via a base station of a mobile communication network and a function of performing an inter-terminal direct communication with neighboring radio terminal apparatuses, the program comprising:
a program code for receiving a permission message including radio resource information for HARQ retransmission from the base station without receiving a HARQ negative acknowledgment from the neighboring radio terminal apparatuses, when a data transmission is performed to the neighboring radio terminal apparatuses via the inter-terminal direct communication; and
a program code for performing an HARQ retransmission of the data transmission to the neighboring radio terminal apparatuses in response to the permission message received from the base station without receiving the HARQ negative acknowledgment from the neighboring radio terminal apparatuses.

33. A program for executing in a computer or a processor provided in a radio terminal apparatus having a function of performing a communication via a base station of a mobile communication network and a function of performing an inter-terminal direct communication with neighboring radio terminal apparatuses, including:
a program code for receiving a data transmission from the neighboring radio terminal apparatuses via the inter-terminal direct communication; and
a program code for transmitting a feedback message including a HARQ negative acknowledgment for the data transmission and a radio-resource assignment request to the base station.

34. A program for executing in a computer or a processor provided in a radio terminal apparatus having a function of performing a communication via a base station of a mobile communication network and a function of performing an inter-terminal direct communication with neighboring radio terminal apparatuses, including:
a program code for receiving a permission message including a HARQ negative acknowledgment and radio resource information for HARQ retransmission from the base station without receiving a HARQ negative acknowledgment from the neighboring radio terminal apparatuses, when a data transmission is performed to the neighboring radio terminal apparatuses via the inter-terminal direct communication; and
a program code for performing an HARQ retransmission of the data transmission to the neighboring radio terminal apparatuses in response to the permission message received from the base station without receiving a HARQ negative acknowledgment from the neighboring radio terminal apparatuses.
